(19) **Europäisches Patentamt / European Patent Office / Office européen des brevets**

(11) **EP 4 742 189 A1**

(12) **EUROPEAN PATENT APPLICATION**
published in accordance with Art. 153(4) EPC

(43) Date of publication:
**13.05.2026 Bulletin 2026/20**

(21) Application number: **24844828.4**

(22) Date of filing: **25.07.2024**

(51) International Patent Classification (IPC):
*G06V 20/52* (2022.01)    *G06V 10/24* (2022.01)
*G06V 10/40* (2022.01)    *G06V 10/82* (2022.01)
*G06V 10/80* (2022.01)    *G06N 3/0464* (2023.01)
*G06N 3/048* (2023.01)    *G06N 3/0985* (2023.01)

(52) Cooperative Patent Classification (CPC):
**G06N 3/0464; G06N 3/048; G06N 3/0985;**
**G06V 10/24; G06V 10/40; G06V 10/80;**
**G06V 10/82; G06V 20/52**

(86) International application number:
**PCT/CN2024/107500**

(87) International publication number:
**WO 2025/021142 (30.01.2025 Gazette 2025/05)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **27.07.2023 CN 202310940169**

(71) Applicant: **Huawei Technologies Co., Ltd.**
**Shenzhen, Guangdong 518129 (CN)**

(72) Inventors:
• **WANG, Chengcheng**
**Shenzhen, Guangdong 518129 (CN)**

• **HE, Wei**
**Shenzhen, Guangdong 518129 (CN)**
• **NIE, Ying**
**Shenzhen, Guangdong 518129 (CN)**
• **LIU, Chuanjian**
**Shenzhen, Guangdong 518129 (CN)**
• **WANG, Yunhe**
**Shenzhen, Guangdong 518129 (CN)**
• **HAN, Kai**
**Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **OBJECT DETECTION METHOD AND RELATED DEVICE THEREOF**

(57) Embodiments of this application disclose an object detection method and a related device. During object detection, comprehensive factors are considered, and therefore object detection can be accurately completed. The method in this application includes: First, a target image including a to-be-detected object may be obtained, and the target image is input to a target model. Then the target model may perform feature extraction on the target image to obtain a first feature, and further perform feature extraction on the first feature to obtain a second feature. Then the target model may perform first fusion on the first feature and the second feature to obtain a first fusion result. Then the target model may enhance the first feature and the second feature based on the first fusion result to obtain an enhanced first feature and an enhanced second feature. Finally, the target model may perform detection by using the enhanced first feature and the enhanced second feature to obtain location information of the object in the target image.

**EP 4 742 189 A1**

Obtain a target image, where the target image includes a to-be-detected object — 501

Perform feature extraction on the target image to obtain a first feature, and perform feature extraction on the first feature to obtain a second feature — 502

Perform first fusion on the first feature and the second feature to obtain a first fusion result — 503

Enhance the first feature and the second feature based on the first fusion result to obtain an enhanced first feature and an enhanced second feature — 504

Obtain location information of the object in the target image based on the enhanced first feature and the enhanced second feature — 505

FIG. 5

## Description

This application claims priority to Chinese Patent Application No. 202310940169.4, filed with the China National Intellectual Property Administration on July 27, 2023, and entitled "OBJECT DETECTION METHOD AND RELATED DEVICE", which is incorporated herein by reference in its entirety.

## TECHNICAL FIELD

Embodiments of this application relate to artificial intelligence (artificial intelligence, AI) technologies, and in particular, to an object detection method and a related device.

## BACKGROUND

As a basic computer vision task, an object detection task is needed in an increasing quantity of scenarios. To meet an object detection requirement of a user in various application scenarios, the object detection task may be completed by using a neural network model in the AI field, to provide an object detection result for the user to view and use, to improve user experience.

In a related technology, when an object needs to be located in a scene, a target image for presenting the scene may be first obtained, and the target image is input to the neural network model. In this case, the neural network model may perform feature extraction on the target image to obtain features at different levels. Then the neural network model may fuse the features at different levels to obtain a feature fusion result. Then the neural network model may perform detection based on the feature fusion result to obtain location information of the object in the target image. This is equivalent to obtaining location information of the object in the scene.

In the foregoing process, the neural network model directly obtains the location information of the object based on the feature fusion result, with a monotonous factor considered. Consequently, accuracy of the location information of the object that is finally output by the model is low, and object detection cannot be accurately completed.

## SUMMARY

Embodiments of this application provide an object detection method and a related device. During object detection, comprehensive factors are considered. Therefore, finally obtained location information of an object is sufficiently accurate, and object detection can be accurately completed.

A first aspect of embodiments of this application provides an object detection method. The method may be implemented by a target model, and the method includes:

When object detection needs to be performed in a scene, the scene may be first photographed to obtain a target image for presenting the scene. The scene presented by the target image includes a to-be-detected object.

After the target image is obtained, the target image may be input to the target model. Therefore, the target model may first perform feature extraction on the target image to obtain a first feature, and then further perform feature extraction on the first feature to obtain a second feature. It should be noted that the target model may extract features at a plurality of levels from the target image, and the first feature and the second feature may be features at two adjacent levels among the features at the plurality of levels. For example, the first feature is a feature at a second-to-last level, and the second feature is a feature at a last level.

After obtaining the first feature and the second feature, the target model may perform first fusion on the first feature and the second feature to obtain a first fusion result. After obtaining the first fusion result, the target model may enhance the first feature and the second feature by using the first fusion result to obtain an enhanced first feature and an enhanced second feature. After obtaining the enhanced first feature and the enhanced second feature, the target model may perform detection by using the enhanced first feature and the enhanced second feature to obtain location information of the object in the target image, and output the location information. This is equivalent to obtaining a location of the object in the scene.

It can be learned from the foregoing method that the target model obtains the location information of the object in the target image based on the enhanced first feature and the enhanced second feature, where the enhanced first feature is obtained based on the first feature and the first fusion result, the enhanced second feature is obtained based on the second feature and the first fusion result, the first feature and the second feature represent different local information of the target image, and the first fusion result represents low-dimensional global information of the target image. Therefore, the target model considers comprehensive factors during object detection, and the location information of the object that is finally output by the target model is sufficiently accurate, so that object detection can be accurately completed.

In a possible implementation, enhancing the first feature and the second feature based on the first fusion result to obtain the enhanced first feature and the enhanced second feature includes: injecting the first fusion result into the first feature to obtain the enhanced first feature, and determining the second feature as the enhanced second feature; or injecting the first fusion result into the first feature to obtain the enhanced first feature, and injecting the first fusion result into the second feature to obtain the enhanced second feature; or determining the first feature as the enhanced first feature, and injecting the first fusion result into the second feature to obtain the enhanced second feature. In the foregoing implementation, the target model may complete data enhancement in a plurality of manners: (1) It is assumed that the target model includes only a data enhancement function for the first feature. Therefore, the target model may inject the first fusion result into the first feature to perform data enhancement on the first feature, to obtain the enhanced first feature. Because the target model does not include a data enhancement function for the second feature, the target model may directly determine the second feature as the enhanced second feature without processing the second feature. (2) It is assumed that the target model includes a data enhancement function for the first feature and the second feature. Therefore, the target model may inject the first fusion result into the first feature to perform data enhancement on the first feature, to obtain the enhanced first feature. Similarly, the target model may further inject the first fusion result into the second feature to perform data enhancement on the second feature, to obtain the enhanced second feature. (3) It is assumed that the target model includes only a data enhancement function for the second feature. Therefore, the target model may inject the first fusion result into the second feature to perform data enhancement on the second feature, to obtain the enhanced second feature. Because the target model does not include a data enhancement function for the first feature, the target model may directly determine the first feature as the enhanced first feature without processing the first feature.

In a possible implementation, injecting the first fusion result into the first feature to obtain the enhanced first feature includes: processing the first fusion result and the first feature based on a cross-attention mechanism to obtain the enhanced first feature. In the foregoing implementation, the target model may perform pointwise convolution on the first feature to obtain a sixth feature. In addition, the target model may further perform pointwise convolution and activation function-based processing on the first fusion result to obtain a seventh feature. In addition, the target model may further perform pointwise convolution only on the first fusion result to obtain an eighth feature. Then the target model may multiply the sixth feature by the seventh feature to obtain a ninth feature, and add the eighth feature to the ninth feature to obtain a tenth feature. Finally, the target model performs reparameterized convolution-based processing on the tenth feature to obtain an eleventh feature, namely, the enhanced first feature.

In a possible implementation, injecting the first fusion result into the second feature to obtain the enhanced second feature includes: processing the first fusion result and the second feature based on the cross-attention mechanism to obtain the enhanced second feature. In the foregoing implementation, the target model may perform pointwise convolution on the second feature to obtain a twelfth feature. In addition, the target model may further perform pointwise convolution, activation function-based processing, and linear interpolation on the first fusion result to obtain a thirteenth feature. In addition, the target model may further perform pointwise convolution and linear interpolation only on the first fusion result to obtain a fourteenth feature. Then the target model may multiply the twelfth feature by the thirteenth feature to obtain a fifteenth feature, and add the fourteenth feature to the fifteenth feature to obtain a sixteenth feature. Finally, the target model performs reparameterized convolution-based processing on the sixteenth feature to obtain a seventeenth feature, namely, the enhanced second feature.

In a possible implementation, the method further includes: preprocessing the first feature based on the second feature to obtain a preprocessed first feature, where the preprocessing includes at least one of the following: alignment, splicing, or convolution; and processing the first fusion result and the first feature based on the cross-attention mechanism to obtain the enhanced first feature includes: processing the first fusion result and the preprocessed first feature based on the cross-attention mechanism to obtain the enhanced first feature. In the foregoing implementation, the target model may align the second feature with the first feature to obtain an eighteenth feature, and perform pointwise convolution on the first feature to obtain a nineteenth feature. Then the target model may splice the eighteenth feature and the nineteenth feature to obtain a twentieth feature. Then the target model may perform pointwise convolution on the twentieth feature to obtain a twenty-first feature, namely, the preprocessed first feature. After obtaining the preprocessed first feature, the target model may perform pointwise convolution on the preprocessed first feature to obtain a sixth feature. In addition, the target model may further perform pointwise convolution and activation function-based processing on the first fusion result to obtain a seventh feature. In addition, the target model may further perform pointwise convolution only on the first fusion result to obtain an eighth feature. Then the target model may multiply the sixth feature by the seventh feature to obtain a ninth feature, and add the eighth feature to the ninth feature to obtain a tenth feature. Finally, the target model performs reparameterized convolution-based processing on the tenth feature to obtain an eleventh feature, namely, the enhanced first feature.

In a possible implementation, the method further includes: preprocessing the second feature based on the first feature to obtain a preprocessed second feature, where the preprocessing includes at least one of the following: alignment, splicing, or convolution; and processing the first fusion result and the second feature based on the cross-attention mechanism to obtain the enhanced second feature includes: processing the first fusion result and the preprocessed second feature based on the cross-attention mechanism to obtain the enhanced second feature. In the foregoing implementation, the target model may align the first feature with the second feature to obtain a twenty-second feature, and perform pointwise convolution on the second feature to obtain a twenty-third feature. Then the target model may splice the twenty-second feature and the twenty-third feature to obtain a twenty-fourth feature. Then the target model may perform pointwise convolution on the twenty-fourth feature to obtain a twenty-fifth feature, namely, the preprocessed second feature. After obtaining the preprocessed second feature, the target model may perform pointwise convolution on the preprocessed second feature to obtain a twelfth feature. In addition, the target model may further perform pointwise convolution, activation function-based processing, and linear interpolation on the first fusion result to obtain a thirteenth feature. In addition, the target model may further perform pointwise convolution and linear interpolation only on the first fusion result to obtain a fourteenth feature. Then the target model may multiply the twelfth feature by the thirteenth feature to obtain a fifteenth feature, and add the fourteenth feature to the fifteenth feature to obtain a sixteenth feature. Finally, the target model performs reparameterized convolution-based processing on the sixteenth feature to obtain a seventeenth feature, namely, the enhanced second feature.

In a possible implementation, the first fusion includes at least one of the following: alignment, splicing, or convolution. In the foregoing implementation, after obtaining the first feature and the second feature, the target model may first align the second feature with the first feature to obtain a third feature. Then the target model may splice the first feature and the third feature to obtain a fourth feature. Then the target model may perform convolution on the fourth feature to obtain a fifth feature, namely, the first fusion result.

In a possible implementation, the method further includes: performing second fusion on the enhanced first feature and the enhanced second feature to obtain a second fusion result; and obtaining the location information of the object in the target image based on the enhanced first feature and the enhanced second feature includes: enhancing, based on the second fusion result, the enhanced first feature and the enhanced second feature to obtain a first feature with secondary enhancement and a second feature with secondary enhancement; and obtaining the location information of the object in the target image based on the first feature with secondary enhancement and the second feature with secondary enhancement. In the foregoing implementation, after obtaining the enhanced first feature and the enhanced second feature, the target model may perform second fusion on the enhanced first feature and the enhanced second feature to obtain the second fusion result. After obtaining the second fusion result, the target model may enhance the enhanced first feature and the enhanced second feature by using the second fusion result to obtain the first feature with secondary enhancement and the second feature with secondary enhancement. After obtaining the first feature with secondary enhancement and the second feature with secondary enhancement, the target model may perform detection by using the first feature with secondary enhancement and the second feature with secondary enhancement to obtain the location information of the object in the target image, and output the location information. This is equivalent to obtaining a location of the object in the scene. It can be learned that the target model may obtain the location information of the object in the target image based on the first feature with secondary enhancement and the second feature with secondary enhancement, where the first feature with secondary enhancement is obtained based on the first feature, the first fusion result, and the second fusion result, the second feature with secondary enhancement is obtained based on the second feature, the first fusion result, and the second fusion result, the first feature and the second feature represent different local information of the target image, the first fusion result represents low-dimensional global information of the target image, and the second fusion result represents high-dimensional global information of the target image. Therefore, the target model considers more comprehensive factors during object detection, and the location information of the object that is finally output by the target model can be more accurate, so that object detection can be more correctly completed.

In a possible implementation, the second fusion includes at least one of the following: alignment, splicing, self-attention mechanism-based processing, feedforward network-based processing, or addition. In the foregoing implementation, after obtaining the enhanced first feature and the enhanced second feature, the target model may first align the first feature with the second feature to obtain a twenty-sixth feature. Then the target model may splice the second feature and the twenty-sixth feature to obtain a twenty-seventh feature. Then the target model may perform self-attention-based processing, feedforward network-based processing, and addition on the twenty-seventh feature to obtain a twenty-eighth feature, namely, the second fusion result.

A second aspect of embodiments of this application provides a model training method. The method includes: obtaining a training image, where the training image includes a to-be-detected object; processing the training image by using a to-be-trained model to obtain location information of the object in the training image, where the to-be-trained model is configured to: perform feature extraction on the training image to obtain a first feature, perform feature extraction on the first feature to obtain a second feature perform first fusion on the first feature and the second feature to obtain a first fusion result, enhance the first feature and the second feature based on the first fusion result to obtain an enhanced first feature and an enhanced second feature, and obtain the location information based on the enhanced first feature and the enhanced second feature; and training the to-be-trained model based on the location information and real location information of the object in the training image to obtain a target model.

The target model obtained in the foregoing method has an object detection function. When object detection needs to be performed, a target image including a to-be-detected object may be obtained, and the target image is input to the target model. Then the target model may perform feature extraction on the target image to obtain a first feature, and further perform feature extraction on the first feature to obtain a second feature. Then the target model may perform first fusion on the first feature and the second feature to obtain a first fusion result. Then the target model may enhance the first feature and the second feature based on the first fusion result to obtain an enhanced first feature and an enhanced second feature. Finally, the target model may perform detection by using the enhanced first feature and the enhanced second feature to obtain location information of the object in the target image. In this case, object detection is completed. In the foregoing process, the target model obtains the location information of the object in the target image based on the enhanced first feature and the enhanced second feature, where the enhanced first feature is obtained based on the first feature and the first fusion result, the enhanced second feature is obtained based on the second feature and the first fusion result, the first feature and the second feature represent different local information of the target image, and the first fusion result represents low-dimensional global information of the target image. Therefore, the target model considers comprehensive factors during object detection, and the location information of the object that is finally output by the target model is sufficiently accurate, so that object detection can be accurately completed.

In a possible implementation, the to-be-trained model is configured to: inject the first fusion result into the first feature to obtain the enhanced first feature, and determine the second feature as the enhanced second feature; or inject the first fusion result into the first feature to obtain the enhanced first feature, and inject the first fusion result into the second feature to obtain the enhanced second feature; or determine the first feature as the enhanced first feature, and inject the first fusion result into the second feature to obtain the enhanced second feature.

In a possible implementation, the to-be-trained model is configured to process the first fusion result and the first feature based on a cross-attention mechanism to obtain the enhanced first feature.

In a possible implementation, the to-be-trained model is configured to process the first fusion result and the second feature based on the cross-attention mechanism to obtain the enhanced second feature.

In a possible implementation, the to-be-trained model is further configured to preprocess the first feature based on the second feature to obtain a preprocessed first feature, where the preprocessing includes at least one of the following: alignment, splicing, or convolution; and the to-be-trained model is configured to process the first fusion result and the preprocessed first feature based on the cross-attention mechanism to obtain the enhanced first feature.

In a possible implementation, the to-be-trained model is further configured to preprocess the second feature based on the first feature to obtain a preprocessed second feature, where the preprocessing includes at least one of the following: alignment, splicing, or convolution; and the to-be-trained model is configured to process the first fusion result and the preprocessed second feature based on the cross-attention mechanism to obtain the enhanced second feature.

In a possible implementation, the first fusion includes at least one of the following: alignment, splicing, or convolution.

In a possible implementation, the to-be-trained model is further configured to perform second fusion on the enhanced first feature and the enhanced second feature to obtain a second fusion result; and the to-be-trained model is configured to: enhance, based on the second fusion result, the enhanced first feature and the enhanced second feature to obtain a first feature with secondary enhancement and a second feature with secondary enhancement; and obtain the location information of the object in the training image based on the first feature with secondary enhancement and the second feature with secondary enhancement.

In a possible implementation, the second fusion includes at least one of the following: alignment, splicing, self-attention mechanism-based processing, feedforward network-based processing, or addition.

A third aspect of embodiments of this application provides an object detection apparatus. The apparatus includes a target model, and the apparatus includes: an obtaining module, configured to obtain a target image, where the target image includes a to-be-detected object; an extraction module, configured to perform feature extraction on the target image to obtain a first feature, and perform feature extraction on the first feature to obtain a second feature; a fusion module, configured to perform first fusion on the first feature and the second feature to obtain a first fusion result; an enhancement module, configured to enhance the first feature and the second feature based on the first fusion result to obtain an enhanced first feature and an enhanced second feature; and a detection module, configured to obtain location information of the object in the target image based on the enhanced first feature and the enhanced second feature.

It can be learned from the foregoing apparatus that, when object detection needs to be performed, a target image including a to-be-detected object may be obtained, and the target image is input to the target model. Then the target model may perform feature extraction on the target image to obtain a first feature, and further perform feature extraction on the first feature to obtain a second feature. Then the target model may perform first fusion on the first feature and the second feature to obtain a first fusion result. Then the target model may enhance the first feature and the second feature based on the first fusion result to obtain an enhanced first feature and an enhanced second feature. Finally, the target model may perform detection by using the enhanced first feature and the enhanced second feature to obtain location information of the object in the target image. In this case, object detection is completed. In the foregoing process, the target model obtains the location information of the object in the target image based on the enhanced first feature and the enhanced second feature, where the enhanced first feature is obtained based on the first feature and the first fusion result, the enhanced second feature is obtained based on the second feature and the first fusion result, the first feature and the second feature represent different local information of the target image, and the first fusion result represents low-dimensional global information of the target image. Therefore, the target model considers comprehensive factors during object detection, and the location information of the object that is finally output by the target model is sufficiently accurate, so that object detection can be accurately completed.

In a possible implementation, the enhancement module is configured to: inject the first fusion result into the first feature to obtain the enhanced first feature, and determine the second feature as the enhanced second feature; or inject the first fusion result into the first feature to obtain the enhanced first feature, and inject the first fusion result into the second feature to obtain the enhanced second feature; or determine the first feature as the enhanced first feature, and inject the first fusion result into the second feature to obtain the enhanced second feature.

In a possible implementation, the enhancement module is configured to process the first fusion result and the first feature based on a cross-attention mechanism to obtain the enhanced first feature.

In a possible implementation, the enhancement module is configured to process the first fusion result and the second feature based on the cross-attention mechanism to obtain the enhanced second feature.

In a possible implementation, the apparatus further includes: a first preprocessing model, configured to preprocess the first feature based on the second feature to obtain a preprocessed first feature, where the preprocessing includes at least one of the following: alignment, splicing, or convolution. The enhancement module is configured to process the first fusion result and the preprocessed first feature based on the cross-attention mechanism to obtain the enhanced first feature.

In a possible implementation, the apparatus further includes: a second preprocessing module, configured to preprocess the second feature based on the first feature to obtain a preprocessed second feature, where the preprocessing includes at least one of the following: alignment, splicing, or convolution. The enhancement module is configured to process the first fusion result and the preprocessed second feature based on the cross-attention mechanism to obtain the enhanced second feature.

In a possible implementation, the first fusion includes at least one of the following: alignment, splicing, or convolution.

In a possible implementation, the apparatus further includes: a second fusion module, configured to perform second fusion on the enhanced first feature and the enhanced second feature to obtain a second fusion result. The detection module is configured to: enhance, based on the second fusion result, the enhanced first feature and the enhanced second feature to obtain a first feature with secondary enhancement and a second feature with secondary enhancement; and obtain the location information of the object in the target image based on the first feature with secondary enhancement and the second feature with secondary enhancement.

In a possible implementation, the second fusion includes at least one of the following: alignment, splicing, self-attention mechanism-based processing, feedforward network-based processing, or addition.

A fourth aspect of embodiments of this application provides a model training apparatus. The apparatus includes: an obtaining module, configured to obtain a training image, where the training image includes a to-be-detected object; a processing module, configured to process the training image by using a to-be-trained model to obtain location information of the object in the training image, where the to-be-trained model is configured to: perform feature extraction on the training image to obtain a first feature, perform feature extraction on the first feature to obtain a second feature perform first fusion on the first feature and the second feature to obtain a first fusion result, enhance the first feature and the second feature based on the first fusion result to obtain an enhanced first feature and an enhanced second feature, and obtain the location information based on the enhanced first feature and the enhanced second feature; and a training module, configured to train the to-be-trained model based on the location information and real location information of the object in the training image to obtain a target model.

The target model obtained through training by the apparatus has an object detection function. When object detection needs to be performed, a target image including a to-be-detected object may be obtained, and the target image is input to the target model. Then the target model may perform feature extraction on the target image to obtain a first feature, and further perform feature extraction on the first feature to obtain a second feature. Then the target model may perform first fusion on the first feature and the second feature to obtain a first fusion result. Then the target model may enhance the first feature and the second feature based on the first fusion result to obtain an enhanced first feature and an enhanced second feature. Finally, the target model may perform detection by using the enhanced first feature and the enhanced second feature to obtain location information of the object in the target image. In this case, object detection is completed. In the foregoing process, the target model obtains the location information of the object in the target image based on the enhanced first feature and the enhanced second feature, where the enhanced first feature is obtained based on the first feature and the first fusion result, the enhanced second feature is obtained based on the second feature and the first fusion result, the first feature and the second feature represent different local information of the target image, and the first fusion result represents low-dimensional global information of the target image. Therefore, the target model considers comprehensive factors during object detection, and the location information of the object that is finally output by the target model is sufficiently accurate, so that object detection can be accurately completed.

In a possible implementation, the to-be-trained model is configured to: inject the first fusion result into the first feature to obtain the enhanced first feature, and determine the second feature as the enhanced second feature; or inject the first fusion result into the first feature to obtain the enhanced first feature, and inject the first fusion result into the second feature to obtain the enhanced second feature; or determine the first feature as the enhanced first feature, and inject the first fusion result into the second feature to obtain the enhanced second feature.

In a possible implementation, the to-be-trained model is configured to process the first fusion result and the first feature based on a cross-attention mechanism to obtain the enhanced first feature.

In a possible implementation, the to-be-trained model is configured to process the first fusion result and the second feature based on the cross-attention mechanism to obtain the enhanced second feature.

In a possible implementation, the to-be-trained model is further configured to preprocess the first feature based on the second feature to obtain a preprocessed first feature, where the preprocessing includes at least one of the following: alignment, splicing, or convolution; and the to-be-trained model is configured to process the first fusion result and the preprocessed first feature based on the cross-attention mechanism to obtain the enhanced first feature.

In a possible implementation, the to-be-trained model is further configured to preprocess the second feature based on the first feature to obtain a preprocessed second feature, where the preprocessing includes at least one of the following: alignment, splicing, or convolution; and the to-be-trained model is configured to process the first fusion result and the preprocessed second feature based on the cross-attention mechanism to obtain the enhanced second feature.

In a possible implementation, the first fusion includes at least one of the following: alignment, splicing, or convolution.

In a possible implementation, the to-be-trained model is further configured to perform second fusion on the enhanced first feature and the enhanced second feature to obtain a second fusion result; and the to-be-trained model is configured to: enhance, based on the second fusion result, the enhanced first feature and the enhanced second feature to obtain a first feature with secondary enhancement and a second feature with secondary enhancement; and obtain the location information of the object in the training image based on the first feature with secondary enhancement and the second feature with secondary enhancement.

In a possible implementation, the second fusion includes at least one of the following: alignment, splicing, self-attention mechanism-based processing, feedforward network-based processing, or addition.

A fifth aspect of embodiments of this application provides an object detection apparatus. The apparatus includes a memory and a processor. The memory stores code. The processor is configured to execute the code. When the code is executed, the object detection apparatus performs the method according to any one of the first aspect or the possible implementations of the first aspect.

A sixth aspect of embodiments of this application provides a model training apparatus. The apparatus includes a memory and a processor. The memory stores code. The processor is configured to execute the code. When the code is executed, the model training apparatus performs the method according to any one of the second aspect or the possible implementations of the second aspect.

A seventh aspect of embodiments of this application provides a circuit system. The circuit system includes a processing circuit. The processing circuit is configured to perform the method according to any one of the first aspect or the possible implementations of the first aspect, or any one of the second aspect or the possible implementations of the second aspect.

An eighth aspect of embodiments of this application provides a chip system. The chip system includes a processor, configured to invoke a computer program or computer instructions stored in a memory, to enable the processor to perform the method according to any one of the first aspect or the possible implementations of the first aspect, or any one of the second aspect or the possible implementations of the second aspect.

In a possible implementation, the processor is coupled to the memory through an interface.

In a possible implementation, the chip system further includes a memory. The memory stores a computer program or computer instructions.

A ninth aspect of embodiments of this application provides a computer storage medium. The computer storage medium stores a computer program. When the program is executed by a computer, the computer is enabled to perform the method according to any one of the first aspect or the possible implementations of the first aspect, or any one of the second aspect or the possible implementations of the second aspect.

A tenth aspect of embodiments of this application provides a computer program product. The computer program product stores instructions. When the instructions are executed by a computer, the computer is enabled to perform the method according to any one of the first aspect or the possible implementations of the first aspect, or any one of the second aspect or the possible implementations of the second aspect.

In embodiments of this application, when object detection needs to be performed, a target image including a to-be-detected object may be obtained, and the target image is input to a target model. Then the target model may perform feature extraction on the target image to obtain a first feature, and further perform feature extraction on the first feature to obtain a second feature. Then the target model may perform first fusion on the first feature and the second feature to obtain a first fusion result. Then the target model may enhance the first feature and the second feature based on the first fusion result to obtain an enhanced first feature and an enhanced second feature. Finally, the target model may perform detection by using the enhanced first feature and the enhanced second feature to obtain location information of the object in the target image. In this case, object detection is completed. In the foregoing process, the target model obtains the location information of the object in the target image based on the enhanced first feature and the enhanced second feature, where the enhanced first feature is obtained based on the first feature and the first fusion result, the enhanced second feature is obtained based on the second feature and the first fusion result, the first feature and the second feature represent different local information of the target image, and the first fusion result represents low-dimensional global information of the target image. Therefore, the target model considers comprehensive factors during object detection, and the location information of the object that is finally output by the target model is sufficiently accurate, so that object detection can be accurately completed.

## BRIEF DESCRIPTION OF DRAWINGS

FIG. 1 is a diagram of a structure of a main framework of artificial intelligence;
FIG. 2a is a diagram of a structure of an item recommendation system according to an embodiment of this application;
FIG. 2b is a diagram of another structure of an item recommendation system according to an embodiment of this application;
FIG. 2c is a diagram of a related device for item recommendation according to an embodiment of this application;
FIG. 3 is a diagram of an architecture of a system 100 according to an embodiment of this application;
FIG. 4 is a diagram of a structure of a target model according to an embodiment of this application;
FIG. 5 is a schematic flowchart of an item recommendation method according to an embodiment of this application;
FIG. 6 is another diagram of a target model according to an embodiment of this application;
FIG. 7 is a diagram of a structure of a low-dimensional alignment module and a low-dimensional fusion module according to an embodiment of this application;
FIG. 8 is a diagram of a structure of an injection module according to an embodiment of this application;
FIG. 9 is a diagram of another structure of an injection module according to an embodiment of this application;
FIG. 10 is a diagram of another structure of a target model according to an embodiment of this application;
FIG. 11 is a diagram of a structure of an enhanced injection module according to an embodiment of this application;
FIG. 12 is a diagram of cross-layer information fusion processing according to an embodiment of this application;
FIG. 13 is diagram of another structure of an enhanced injection module according to an embodiment of this application;
FIG. 14 is another diagram of cross-layer information fusion processing according to an embodiment of this application;
FIG. 15 is a diagram of another structure of a target model according to an embodiment of this application;
FIG. 16 is a schematic flowchart of an item recommendation method according to an embodiment of this application;
FIG. 17 is another diagram of a target model according to an embodiment of this application;
FIG. 18 is a diagram of a structure of a high-dimensional alignment module and a high-dimensional fusion module according to an embodiment of this application;
FIG. 19 is a diagram of a comparison result according to an embodiment of this application;
FIG. 20 is a schematic flowchart of a model training method according to an embodiment of this application;
FIG. 21 is a diagram of a structure of an object detection apparatus according to an embodiment of this application;
FIG. 22 is a diagram of a structure of a model training apparatus according to an embodiment of this application;
FIG. 23 is a diagram of a structure of an execution device according to an embodiment of this application;
FIG. 24 is a diagram of a structure of a training device according to an embodiment of this application; and
FIG. 25 is a diagram of a structure of a chip according to an embodiment of this application.

## DESCRIPTION OF EMBODIMENTS

Embodiments of this application provide an object detection method and a related device. During object detection, comprehensive factors are considered. Therefore, finally obtained location information of an object is sufficiently accurate, and object detection can be accurately completed.

In this specification, the claims, and the accompanying drawings of this application, the terms "first", "second", and the like are intended to distinguish between similar objects but do not necessarily indicate a specific order or sequence. It should be understood that the terms used in this way are interchangeable in proper circumstances and are merely intended for distinguishing when objects having a same attribute are described in embodiments of this application. In addition, the terms "include", "have", and any variants thereof are intended to cover a non-exclusive inclusion, so that a process, a method, a system, a product, or a device that includes a series of units is not necessarily limited to the units, but may include other units that are not clearly listed or are inherent to the process, the method, the product, or the device.

As a basic computer vision task, an object detection task is needed in an increasing quantity of scenarios. To meet an object detection requirement of a user in various application scenarios (for example, autonomous driving, intelligent security protection, robot navigation, and medical diagnosis), the object detection task may be completed by using a neural network model in the AI field, to provide an object detection result for the user to view and use, to improve user experience.

In the related technology, when an object needs to be located in a scene, a target image for presenting the scene may be first obtained, and the target image is input to the neural network model. The neural network model may include a feature extraction module, a feature fusion module, and a detection module. In this case, each layer of the feature extraction module may perform feature extraction on the target image, and output a feature obtained at each layer, that is, features at different levels. Then the feature fusion module may fuse the features at different levels to obtain a feature fusion result. Then the detection module may perform detection based on the feature fusion result to obtain location information of the object in the target image, and output the location information. This is equivalent to obtaining location information of the object in the scene.

In the foregoing process, the neural network model directly obtains the location information of the object based on the feature fusion result, with a monotonous factor considered. Consequently, accuracy of the location information of the object that is finally output by the model is low, and object detection cannot be accurately completed.

To resolve the foregoing problem, embodiments of this application provide an object detection method. The method may be implemented based on an artificial intelligence (artificial intelligence, AI) technology. The AI technology is a technical discipline for simulating, extending, and expanding human intelligence by using a digital computer or a machine controlled by a digital computer. The AI technology achieves an optimal result by sensing an environment, obtaining knowledge, and using the knowledge. In other words, the artificial intelligence technology is a branch of computer science, and is intended to understand essence of intelligence and produce a new intelligent machine that can react in a manner similar to human intelligence. A common application mode of artificial intelligence is to use artificial intelligence to process data.

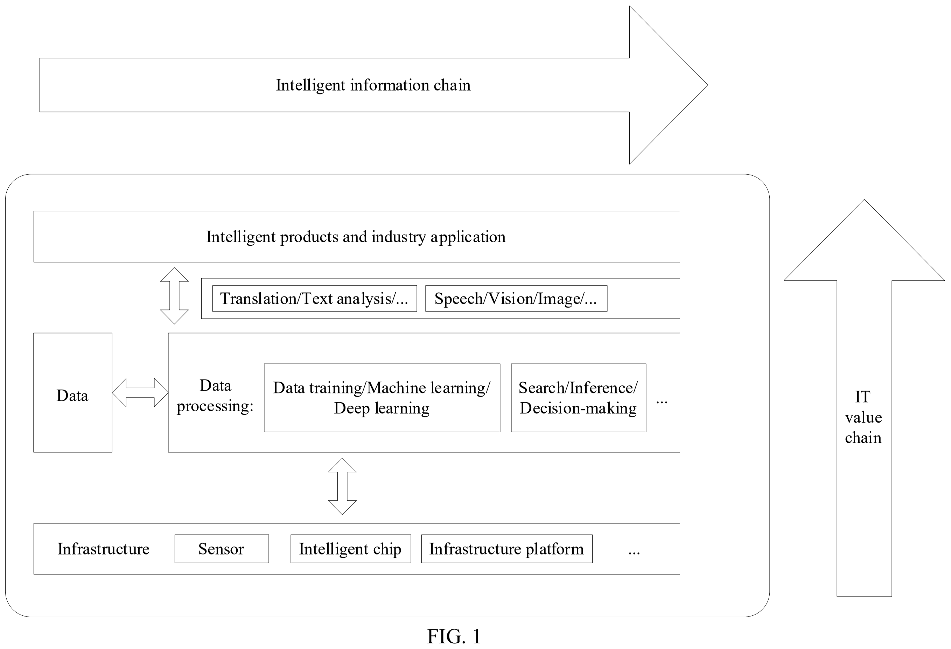

First, an overall operation process of an artificial intelligence system is described. FIG. 1 is a diagram of a structure of a main framework of artificial intelligence. The following describes the main framework of artificial intelligence from two dimensions: "intelligent information chain" (a horizontal axis) and "IT value chain" (a vertical axis). The "intelligent information chain" indicates a process from data obtaining to data processing. For example, the process may be a general process of intelligent information perception, intelligent information representation and formation, intelligent inference, intelligent decision-making, and intelligent execution and output. In this process, data undergoes a refinement process of "data-information-knowledge-intelligence". The "IT value chain" indicates value brought by artificial intelligence to the information technology industry in a process from underlying infrastructure and information (implemented by providing and processing technologies) of artificial intelligence to industrial ecology of a system.

(1) Infrastructure

The infrastructure provides computing capability support for the artificial intelligence system, implements communication with the outside world, and implements support through an infrastructure platform. Communication with the outside is performed through a sensor. A computing capability is provided by an intelligent chip (a hardware acceleration chip, for example, a CPU, an NPU, a GPU, an ASIC, or an FPGA). The infrastructure platform includes platform assurance and support related to a distributed computing framework, a network, and the like, and may include cloud storage and computing, an interconnection network, and the like. For example, the sensor communicates with the outside to obtain data, and the data is provided for an intelligent chip in a distributed computing system provided by the infrastructure platform to perform computing.

(2) Data

Data at an upper layer of the infrastructure indicates a data source in the artificial intelligence field. The data relates to graphics, images, speech, and text, and further relates to internet of things data of conventional devices, including service data of an existing system and sensory data such as force, displacement, a liquid level, temperature, and humidity.

(3) Data processing

The data processing usually includes data training, machine learning, deep learning, searching, inference, decision-making, and the like.

The machine learning and the deep learning may be used for performing symbolic and formal intelligent information modeling, extraction, preprocessing, training, and the like on data.

The inference is a process of performing machine thinking and solving problems by simulating an intelligent inference mode of humans in a computer or intelligent system by using formal information and according to an inference control policy. A typical function is searching and matching.

The decision-making is a process of making a decision after intelligent information is inferred, and usually provides classification, ranking, prediction, and other functions.

(4) General capabilities

After data undergoes the foregoing data processing, some general capabilities may be further formed based on a data processing result. For example, the general capabilities may be an algorithm or a general system, for example, translation, text analysis, computer vision processing, speech recognition, and image recognition.

(5) Intelligent products and industry application

The intelligent products and the industry application are products and application of the artificial intelligence system in various fields, are obtained by packaging an overall artificial intelligence solution, and implement productization and practical application of intelligent information decision-making. Application fields of the artificial intelligence system include intelligent terminals, intelligent transportation, intelligent healthcare, autonomous driving, smart city, and the like.

The following describes several application scenarios of this application.

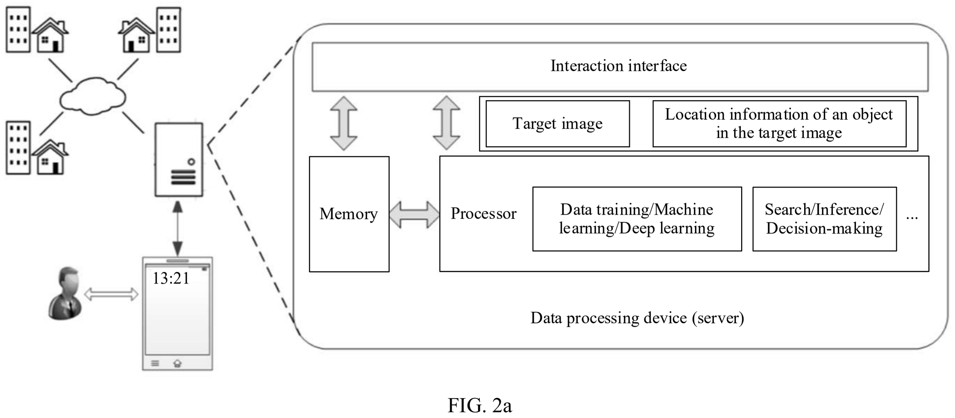

FIG. 2a is a diagram of a structure of an object detection system according to an embodiment of this application. The object detection system includes user equipment and a data processing device. The user equipment includes an intelligent terminal, for example, a mobile phone, a personal computer, or an information processing center. The user equipment is an initiator of object detection, and serves as an initiator of an object detection request. A user usually initiates a request by using the user equipment.

The data processing device may be a device or a server with a data processing function, for example, a cloud server, a network server, an application server, or a management server. The data processing device receives a text processing request from the intelligent terminal through an interaction interface, and then performs text processing in a manner of machine learning, deep learning, searching, inference, decision-making, or the like by using a memory for storing data and a processor for processing data. The memory in the data processing device may be a collective term, and includes a local storage and a database for storing historical data. The database may be deployed on the data processing device or another network server.

In the object detection system shown in FIG. 2a, the user equipment may receive an instruction from a user. For example, the user equipment may obtain an image input or selected by the user, and then initiate a request to the data processing device, so that the data processing device runs an image processing application for the image obtained by the user equipment, to obtain a processing result corresponding to the image. For example, the user equipment may obtain a target image (used to present a scene, where the scene includes a to-be-detected object) input by the user, and then initiate a processing request for the target image to the data processing device, so that the data processing device performs object detection-based processing on the target image to obtain location information of the object in the target image, to be specific, coordinates of the object in an image coordinate system (built based on the target image).

In FIG. 2a, the data processing device may perform the object detection method in embodiments of this application.

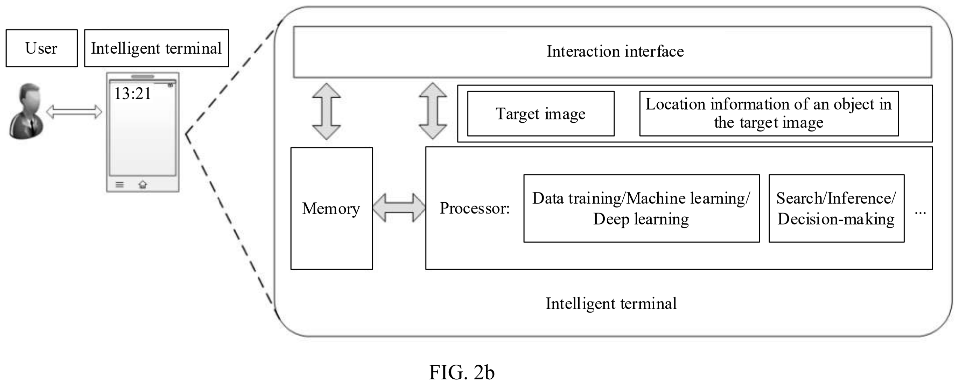

FIG. 2b is a diagram of another structure of an object detection system according to an embodiment of this application. In FIG. 2b, user equipment directly serves as a data processing device. The user equipment can directly obtain an input from a user, and hardware of the user equipment directly performs processing. A specific process is similar to that in FIG. 2a. Refer to the foregoing descriptions. Details are not described herein again.

In the object detection system shown in FIG. 2b, the user equipment may obtain a target image (used to present a scene, where the scene includes a to-be-detected object) input by the user, and then perform object detection-based processing on the target image to obtain location information of the object in the target image, to be specific, coordinates of the object in an image coordinate system (built based on the target image).

In FIG. 2b, the user equipment may perform the object detection method in embodiments of this application.

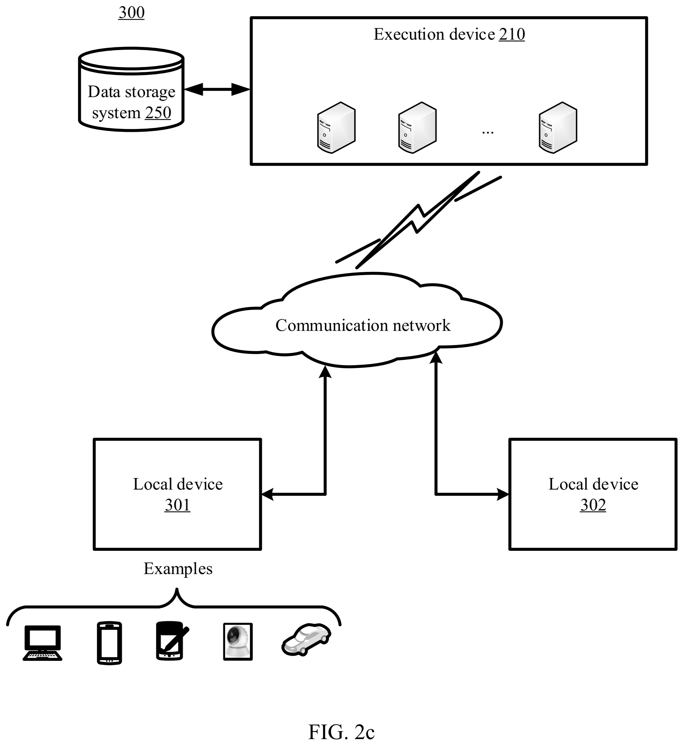

FIG. 2c is a diagram of a related device for object detection according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be deployed on a cloud or another network server.

In FIG. 2a and FIG. 2b, a processor may perform data training, machine learning, or deep learning by using a neural network model or another model (for example, a model based on a support vector machine), and run an image processing application for an image by using a model finally obtained through data training or learning, to obtain a corresponding processing result.

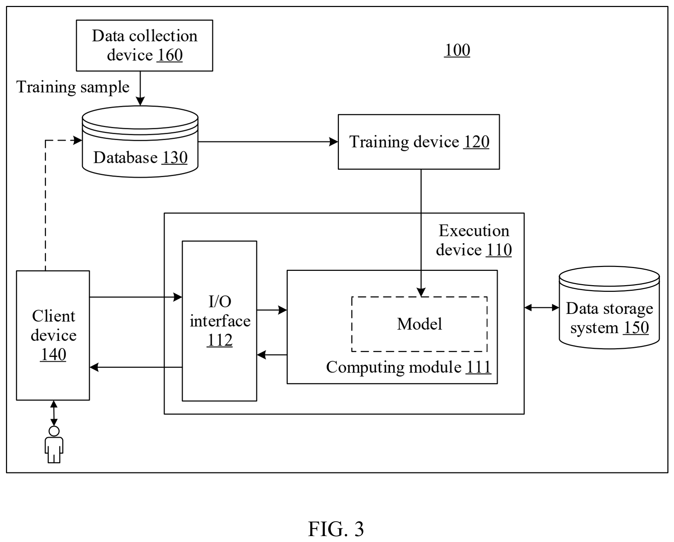

FIG. 3 is a diagram of an architecture of a system 100 according to an embodiment of this application. In FIG. 3, an execution device 110 is provided with an input/output (input/output, I/O) interface 112, configured to exchange data with an external device. A user may input data to the I/O interface 112 by using a client device 140. In this embodiment of this application, the input data may include to-be-scheduled tasks, callable resources, and other parameters.

When the execution device 110 preprocesses the input data, or when a computing module 111 of the execution device 110 performs related processing processes such as computing (for example, performs function implementation of a neural network in this application), the execution device 110 may invoke data, code, or the like in a data storage system 150 for corresponding processing, or may store data, instructions, or the like obtained through corresponding processing to the data storage system 150.

Finally, the I/O interface 112 returns a processing result to the client device 140, to provide the processing result for the user.

It should be noted that, for different objectives or different tasks, a training device 120 may generate corresponding target models/rules based on different training data, where the corresponding target models/rules may be used to achieve the foregoing objectives or complete the foregoing tasks, to provide needed results for the user. The training data may be stored in a database 130, and comes from a training sample collected by a data collection device 160.

In the case shown in FIG. 3, the user may manually provide the input data, and manually providing may be implemented on an interface provided by the I/O interface 112. In another case, the client device 140 may automatically send the input data to the I/O interface 112. If the client device 140 needs to automatically send the input data, authorization needs to be obtained from the user. In this case, the user may set corresponding permission on the client device 140. The user may view, on the client device 140, a result output by the execution device 110. The result may be specifically presented in a manner of displaying, sound, an action, or the like. The client device 140 may alternatively serve as a data collection terminal, to collect the input data input to the I/O interface 112 and an output result output by the I/O interface 112 that are shown in the figure, and store the input data and the output result to the database 130 as new sample data. Certainly, the client device 140 may alternatively not perform collection, and the I/O interface 112 directly stores, to the database 130 as new sample data, the input data input to the I/O interface 112 and an output result output by the I/O interface 112 that are shown in the figure.

It should be noted that FIG. 3 is merely a diagram of a system architecture according to an embodiment of this application. A positional relationship between devices, components, modules, and the like shown in the figure does not constitute any limitation. For example, in FIG. 3, the data storage system 150 is an external memory relative to the execution device 110. In another case, the data storage system 150 may alternatively be deployed in the execution device 110. As shown in FIG. 3, a neural network may be obtained through training based on the training device 120.

An embodiment of this application further provides a chip. The chip includes a neural-network processing unit NPU. The chip may be disposed in the execution device 110 shown in FIG. 3 to perform computing work of the computing module 111. The chip may alternatively be disposed in the training device 120 shown in FIG. 3, to perform training work of the training device 120 and output a target model/rule.

The neural-network processing unit NPU is mounted to a host central processing unit (central processing unit, CPU) (host CPU) as a coprocessor, and the host CPU allocates a task to the NPU. A core part of the NPU is an operation circuit. A controller controls the operation circuit to extract data in a memory (a weight memory or an input memory) and perform an operation.

In some implementations, the operation circuit includes a plurality of process engines (process engine, PE). In some implementations, the operation circuit is a two-dimensional systolic array. The operation circuit may alternatively be a one-dimensional systolic array or another electronic circuit capable of performing mathematical operations such as multiplication and addition. In some implementations, the operation circuit is a general-purpose matrix processor.

For example, it is assumed that there is an input matrix A, a weight matrix B, and an output matrix C. The operation circuit fetches, from the weight memory, data corresponding to the matrix B, and caches the data in each PE in the operation circuit. The operation circuit fetches data of the matrix A from the input memory to perform a matrix operation on the matrix B, and stores an obtained partial result or an obtained final result of the matrix in an accumulator (accumulator).

A vector computing unit may perform further processing, for example, vector multiplication, vector addition, an exponential operation, a logarithmic operation, or magnitude comparison, on an output of the operation circuit. For example, the vector computing unit may be used for network computing, for example, pooling (pooling), batch normalization (batch normalization), or local response normalization (local response normalization), at a non-convolutional/non-FC layer in a neural network.

In some implementations, the vector computing unit can store a processed output vector to a unified buffer. For example, the vector computing unit may apply a nonlinear function to the output of the operation circuit, for example, a vector of an accumulated value, to generate an activation value. In some implementations, the vector computing unit generates a normalized value, a combined value, or both a normalized value and a combined value. In some implementations, the processed output vector can be used as an activation input for the operation circuit, for example, used at a subsequent layer in the neural network.

A unified memory is configured to store input data and output data.

For weight data, a direct memory access controller (direct memory access controller, DMAC) directly transfers input data in an external memory to the input memory and/or the unified memory, stores weight data in the external memory to the weight memory, and stores data in the unified memory to the external memory.

A bus interface unit (bus interface unit, BIU) is configured to implement interaction between the host CPU, the DMAC, and an instruction fetch buffer through a bus.

The instruction fetch buffer (instruction fetch buffer) connected to the controller is configured to store instructions to be used by the controller.

The controller is configured to invoke the instructions cached in the instruction fetch buffer, to control an operating process of the operation accelerator.

Usually, all of the unified memory, the input memory, the weight memory, and the instruction fetch buffer each are on-chip (On-Chip) memories, and the external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes related terms and related concepts such as the neural network in embodiments of this application.

(1) Neural network

The neural network may include a neuron. The neuron may be an operation unit that uses $x_s$ and an intercept of 1 as an input. An output of the operation unit may be as follows:

$$h_{W,b}\left(x\right) = f\left(W^T x\right) = f\left(\sum\nolimits_{s=1}^{n} W_s x_s + b\right) \qquad (1)$$

s=1, 2, ..., or n, n is a natural number greater than 1, $W_s$ is a weight of $x_s$, and b is a bias of the neuron. f is an activation function (activation function) of the neuron, and is used to introduce a nonlinear characteristic into the neural network, to convert an input signal in the neuron into an output signal. The output signal of the activation function may serve as an input of a next convolutional layer. The activation function may be a sigmoid function. The neural network is a network formed by connecting many individual neurons together. To be specific, an output of a neuron may be an input of another neuron. An input for each neuron may be connected to a local receptive field of a previous layer to extract a feature of the local receptive field. The local receptive field may be an area including several neurons.

Work at each layer of the neural network may be described by using a mathematical expression $y = a(Wx+b)$. From a physical layer, work at each layer of the neural network may be understood as performing transformation from input space to output space (in other words, from row space to column space of a matrix) through five operations on the input space (a set of input vectors). The five operations include: 1. dimensionality increase/dimensionality reduction; 2. scale-up/scale-down; 3. rotation; 4. translation; and 5. "bending". The operations 1, 2, and 3 are performed by $Wx$, the operation 4 is performed by $+b$, and the operation 5 is implemented by $a()$. The term "space" is used herein for expression because a categorized object is not a single object but a type of object, and the space is a set of all individuals of this type of object. W is a weight vector, and each value in the vector represents a weight value of one neuron at this layer of neural network. The vector W determines the foregoing spatial transformation from the input space to the output space. To be specific, a weight W of each layer controls a manner of spatial transformation. An objective of training the neural network is to finally obtain a weight matrix (a weight matrix including vectors W of a plurality of layers) of all layers of a trained neural network. Therefore, a neural network training process is essentially to learn a manner of controlling spatial transformation, more specifically, to learn a weight matrix.

Because an output of the neural network is expected to be close, as much as possible, to a predicted value that is actually expected, a predicted value of a current network may be compared with a target value that is actually expected, and then a weight vector of each layer of the neural network is updated based on a difference between the predicted value and the target value (certainly, before a 1st update, an initialization process is usually performed, to be specific, parameters are preconfigured for all layers of the neural network). For example, if the predicted value of the network is large, the weight vector is adjusted to decrease the predicted value, and adjustment is continuously performed until the neural network can obtain, through prediction, the target value that is actually expected. Therefore, "how to obtain, through comparison, a difference between a predicted value and a target value" needs to be predefined. This is the loss function (loss function) or an objective function (objective function). The loss function and the objective function are important equations for measuring a difference between a predicted value and a target value. The loss function is used as an example. A larger output value (loss) of the loss function indicates a greater difference. Therefore, training of the neural network is a process of minimizing the loss.

(2) Back propagation algorithm

During training of a neural network, an error back propagation (back propagation, BP) algorithm may be used to correct a value of a parameter in an initial neural network model, to make a reconstruction error loss of the neural network model become increasingly small. Specifically, an input signal is transferred forward until an error loss occurs at an output, and the parameter in the initial neural network model is updated through back propagation of error loss information, to make the error loss converge. The back propagation algorithm is an error-loss-centered back propagation motion intended to obtain an optimal parameter, for example, a weight matrix, of the neural network model.

The following describes the methods provided in this application from a perspective of neural network training and a perspective of neural network application.

A model training method provided in embodiments of this application relates to data sequence processing, and may be specifically applied to a data training method, a machine learning method, a deep learning method, or the like, to perform symbolic and formal intelligent information modeling, extraction, preprocessing, training, and the like on training data (for example, a training image in this application), to finally obtain a trained neural network (for example, a target model in this application). In addition, an object detection method provided in embodiments of this application may be applied to the trained neural network. Input data (for example, a target image in this application) is input to the trained neural network, to obtain output data (for example, location information of an object in the target image in this application). It should be noted that the model training method and the object detection method provided in embodiments of this application are invented based on a same concept, and may also be understood as two parts of a system, or two stages of an overall process, for example, a model training stage and a model application stage.

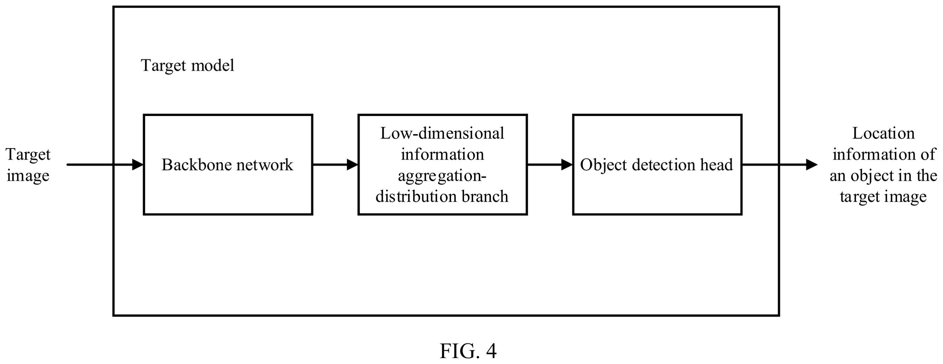

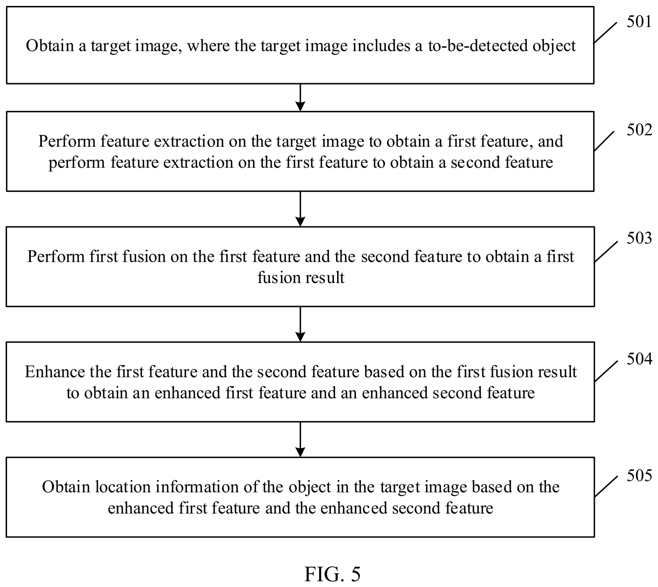

The following first describes the object detection method provided in embodiments of this application. The object detection method provided in embodiments of this application may be implemented by a target model, and the target model may be of a plurality of structures. The following first describes a first mechanism of the target model. FIG. 4 is a diagram of a structure of a target model according to an embodiment of this application. As shown in FIG. 4, the target model includes a backbone network, a low-dimensional information aggregation-distribution branch, and an object detection head. An input end of the backbone network serves as an input end of the entire target model. An output end of the backbone network is connected to an input end of the low-dimensional information aggregation-distribution branch. An output end of the low-dimensional information aggregation-distribution branch is connected to an input end of the object detection head. An output end of the object detection head serves as an output end of the entire target model. For further understanding of an operating process of the target model, the following further describes the operating process. FIG. 5 is a schematic flowchart of an item recommendation method according to an embodiment of this application. As shown in FIG. 5, the method includes the following steps.

501: Obtain a target image, where the target image includes a to-be-detected object.

In this embodiment, when an object in a scene needs to be located, the scene may be first photographed to obtain a target image for presenting the scene. It can be learned that the scene presented by the target image includes a to-be-detected (to-be- located) object.

502: Perform feature extraction on the target image to obtain a first feature, and perform feature extraction on the first feature to obtain a second feature.

After the target image is obtained, the target image may be input to the target model. Therefore, the target model may first perform feature extraction on the target image to obtain the first feature, and then further perform feature extraction on the first feature to obtain the second feature.

Specifically, the target model may obtain the first feature and the second feature in the following manner:

After the target image is obtained, because the backbone network of the target model includes a plurality of feature extraction layers, a $1^{st}$ feature extraction layer of the backbone network may perform feature extraction on the target image to obtain a first-level feature, a $2^{nd}$ feature extraction layer of the backbone network may perform feature extraction on the first-level feature to obtain a second-level feature, ..., and a last feature extraction layer of the backbone network may perform feature extraction on a second-to-last-level feature to obtain a last-level feature. Therefore, the backbone network may output features at a plurality of levels. Among the features at the plurality of levels, a feature at a lower level has a larger size, and a feature at a higher level has a smaller size.

Operations on features at all subsequent levels are similar. Therefore, in the following descriptions, features at two adjacent levels are selected from the features at the plurality of levels as an example for description. In addition, a feature at a lower level is referred to as the first feature, a feature at a higher level is referred to as the second feature, and a size of the first feature is greater than a size of the second feature. For example, the first feature is the first-level feature, and the second feature is the second-level feature. For another example, the first feature is a fifth-level feature, and the second feature is a sixth-level feature. For still another example, the first feature is the second-to-last-level feature, and the second feature is the last-level feature.

In this case, after obtaining the first feature and the second feature, the backbone network may send the first feature and the second feature to the low-dimensional information aggregation-distribution branch.

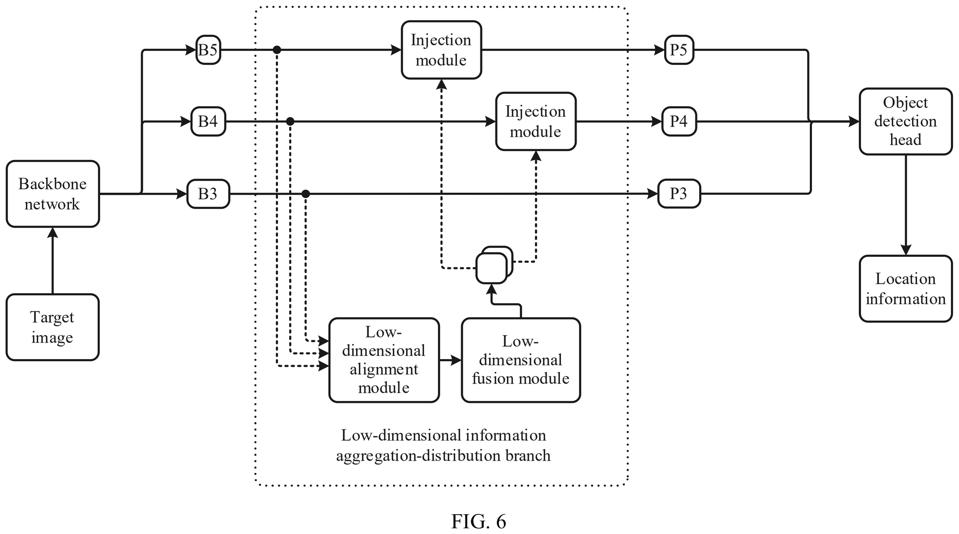

For example, as shown in FIG. 6 (FIG. 6 is another diagram of a target model according to an embodiment of this application), it is assumed that the target model includes a backbone network, a low-dimensional information aggregation-distribution branch, and an object detection head, and the backbone network includes three feature extraction layers. After the target image is input to the backbone network of the target model, the backbone network may separately output a first-level feature B3, a second-level feature B4, and a third-level feature B5, and send B3, B4, and B5 to the low-dimensional information aggregation-distribution branch. A size of B3 is greater than a size of B4, and the size of B4 is greater than a size of B5.

503: Perform first fusion on the first feature and the second feature to obtain a first fusion result.

After obtaining the first feature and the second feature, the target model may perform first fusion (a feature fusion manner) on the first feature and the second feature to obtain the first fusion result.

Specifically, the target model may obtain the first fusion result in the following manner:

After obtaining the first feature and the second feature, the low-dimensional information aggregation-distribution branch may first align the second feature with the first feature to obtain a third feature. It can be understood that the size of the first feature is the same as a size of the third feature. Then the low-dimensional information aggregation-distribution branch may splice the first feature and the third feature to obtain a fourth feature. Then the low-dimensional information aggregation-distribution branch may perform convolution (for example, reparameterized convolution-based processing) on the fourth feature to obtain a fifth feature, namely, the first fusion result.

It should be understood that the low-dimensional information aggregation-distribution branch is configured to obtain low-dimensional global information of the target image, namely, texture features of the target image, and sizes of the features are usually large. In this case, during feature alignment, the branch tends to use a feature with a larger size as an alignment criterion. To be specific, the branch usually uses the first feature as an alignment criterion. Therefore, the branch usually aligns the second feature with the first feature. Certainly, in some special cases (for example, the second feature is not the last-level feature), the branch may alternatively align the first feature with the second feature to obtain a third feature, and perform splicing and convolution on the second feature and the third feature to obtain the first fusion result.

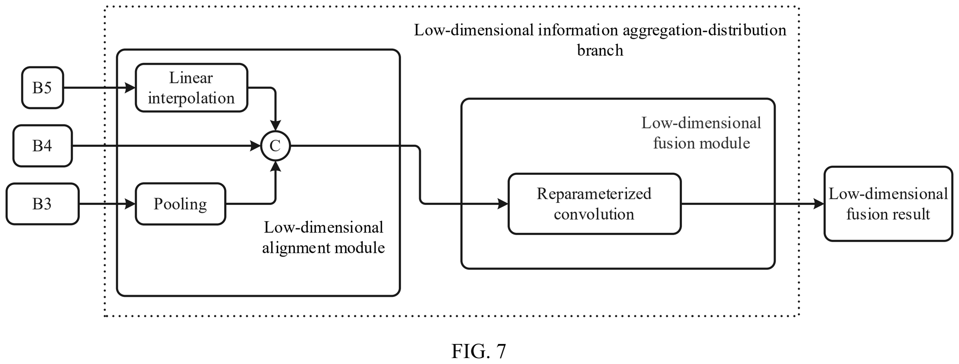

Still in the foregoing example, the low-dimensional information aggregation-distribution branch includes a low-dimensional alignment module, a low-dimensional fusion module, and an injection module. As shown in FIG. 7 (FIG. 7 is a diagram of a structure of a low-dimensional alignment module and a low-dimensional fusion module according to an embodiment of this application), the low-dimensional alignment module may pool B3 by using B4 as an alignment criterion, to reduce the size of B3, to obtain a feature B3' aligned with B4, where a size of B3' is the same as the size of B4. Similarly, the low-dimensional alignment module may perform linear interpolation on B5, to increase the size of B5, to obtain a feature B5' aligned with B4, where a size of B5' is the same as the size of B4. In this case, the low-dimensional alignment module may splice B3', B4, and B5' to obtain a splicing result Fc, and send Fc to the low-dimensional fusion module. Then the low-dimensional fusion module performs reparameterized convolution-based processing on Fc to obtain a low-dimensional fusion result Ffuse, and sends Ffuse to the injection module.

504: Enhance the first feature and the second feature based on the first fusion result to obtain an enhanced first feature and an enhanced second feature.

After obtaining the first fusion result, the target model may enhance the first feature and the second feature by using the first fusion result to obtain the enhanced first feature and the enhanced second feature.

Specifically, the target model may obtain the enhanced first feature and the enhanced second feature in a plurality of manners below:

(1) It is assumed that the low-dimensional information aggregation-distribution branch includes only an injection module for the first feature. The injection module for the first feature may inject the first fusion result into the first feature to perform data enhancement on the first feature, to obtain the enhanced first feature. Because the low-dimensional information aggregation-distribution branch does not include an injection module for the second feature, the branch may directly determine the second feature as the enhanced second feature without processing the second feature.

(2) It is assumed that the low-dimensional information aggregation-distribution branch includes an injection module for the first feature and an injection module for the second feature. The injection module for the first feature may inject the first fusion result into the first feature to perform data enhancement on the first feature, to obtain the enhanced first feature. Similarly, the injection module for the second feature may inject the first fusion result into the second feature to perform data enhancement on the second feature, to obtain the enhanced second feature.

(3) It is assumed that the low-dimensional information aggregation-distribution branch includes only an injection module for the second feature. Because the low-dimensional information aggregation-distribution branch does not include an injection module for the first feature, the branch may directly determine the first feature as the enhanced first feature without processing the first feature. The injection module for the second feature may inject the first fusion result into the second feature to perform data enhancement on the second feature, to obtain the enhanced second feature.

Still in the foregoing example, it is assumed that the low-dimensional information aggregation-distribution branch includes an injection module for B4 and an injection module for B5. In this case, the branch may directly determine B3 as an enhanced third-level feature P3. The injection module for B4 may inject Ffuse into B4 to obtain an enhanced second-level feature P4. The injection module for B5 may inject Ffuse into B5 to obtain an enhanced first-level feature P5.

More specifically, the injection module may be of a plurality of structures. The following first describes an injection module of a first structure. The injection module (a general-type injection module) of the first structure may obtain the enhanced first feature and the enhanced second feature in the following manner:

(1) After obtaining the first fusion result, the injection module for the first feature may process the first fusion result and the first feature based on a cross-attention mechanism to obtain the enhanced first feature. It should be noted that, because the first feature is used as an alignment criterion during obtaining of the first fusion result, a size of the first fusion result is the same as the size of the first feature. In this case, the injection module may perform pointwise convolution on the first feature to obtain a sixth feature. In addition, the injection module may further perform pointwise convolution and activation function-based processing on the first fusion result to obtain a seventh feature. In addition, the injection module may further perform pointwise convolution only on the first fusion result to obtain an eighth feature (in this way, a size of the sixth feature, a size of the seventh feature, and a size of the eighth feature are the same). Then the injection module may multiply the sixth feature by the seventh feature to obtain a ninth feature, and add the eighth feature to the ninth feature to obtain a tenth feature. Finally, the injection module performs reparameterized convolution-based processing on the tenth feature to obtain an eleventh feature, namely, the enhanced first feature.

(2) After obtaining the first fusion result, the injection module for the second feature may process the first fusion result and the second feature based on the cross-attention mechanism to obtain the enhanced second feature. It should be noted that, because the first feature is used as an alignment criterion during obtaining of the first fusion result, a size of the first fusion result is the same as the size of the first feature. In this case, the injection module may perform pointwise convolution on the second feature to obtain a twelfth feature. In addition, the injection module may further perform pointwise convolution, activation function-based processing, and linear interpolation on the first fusion result to obtain a thirteenth feature. In addition, the injection module may further perform pointwise convolution and linear interpolation only on the first fusion result to obtain a fourteenth feature (in this way, a size of the twelfth feature, a size of the thirteenth feature, and a size of the fourteenth feature are the same). Then the injection module may multiply the twelfth feature by the thirteenth feature to obtain a fifteenth feature, and add the fourteenth feature to the fifteenth feature to obtain a sixteenth feature. Finally, the injection module performs reparameterized convolution-based processing on the sixteenth feature to obtain a seventeenth feature, namely, the enhanced second feature.

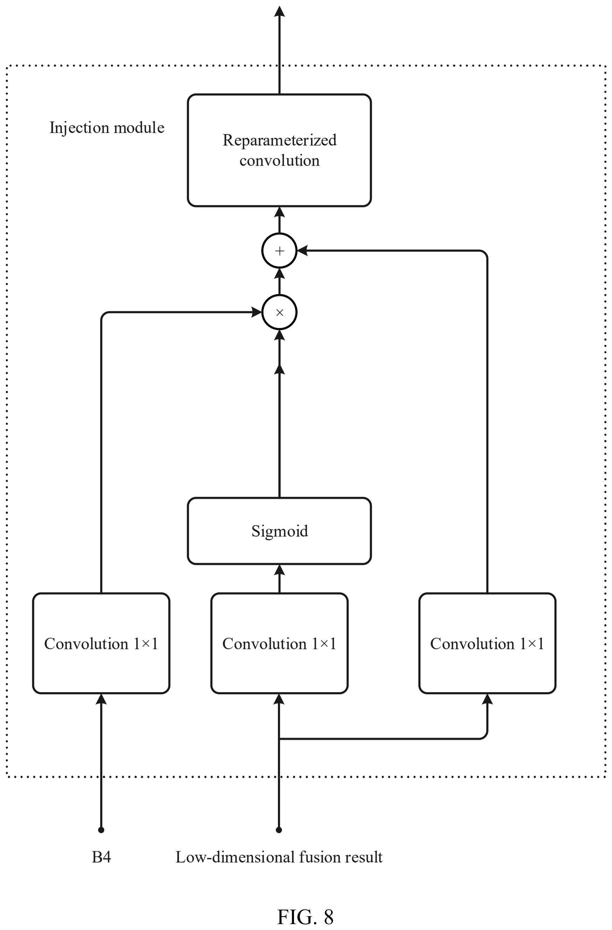

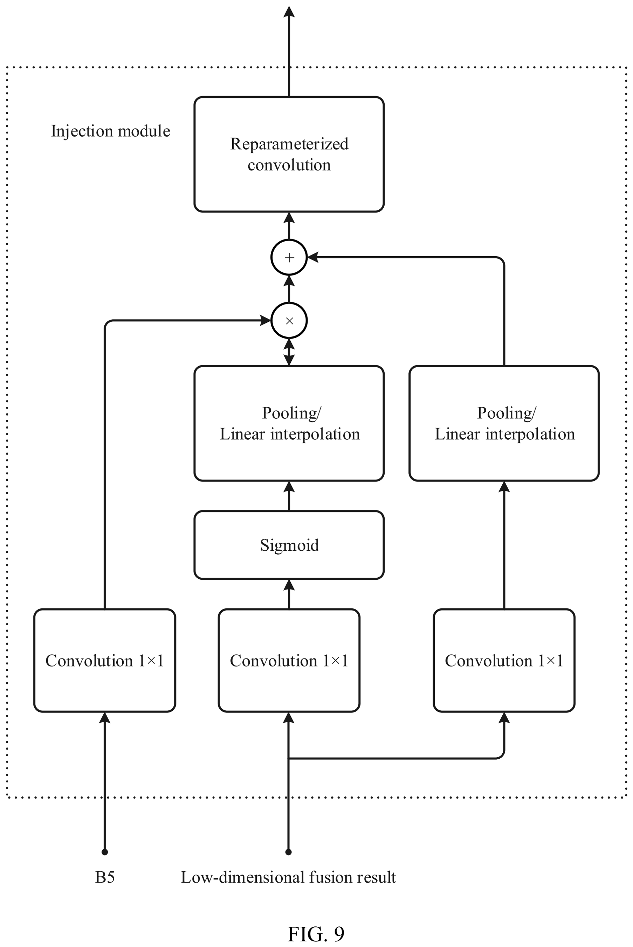

Still in the foregoing example, as shown in FIG. 8 and FIG. 9 (FIG. 8 is a diagram of a structure of an injection module according to an embodiment of this application, and FIG. 9 is a diagram of another structure of an injection module according to an embodiment of this application), after obtaining Ffuse, the injection module for B4 may first perform pointwise convolution (which may also be referred to as convolution 1×1) on B4 to obtain a feature Q4. In addition, the injection module for B4 may further perform pointwise convolution and activation function-based processing (implemented by a sigmoid function) on Ffuse to obtain a feature K4. In addition, the injection module for B4 may further perform pointwise convolution on Ffuse to obtain a feature V4 (Q4, K4, and V4 have a same size). Then the injection module for B4 may multiply Q4 by K4, and then add a multiplication result to V4 to obtain a feature A4. Finally, the injection module for B4 may perform reparameterized convolution processing on A4 to obtain the feature P4.

After obtaining Ffuse, the injection module for B5 may first perform pointwise convolution on B5 to obtain a feature Q5. In addition, the injection module for B5 may further perform pointwise convolution, activation function-based processing, and linear interpolation on Ffuse to obtain a feature K5. In addition, the injection module for B5 may further perform pointwise convolution and linear interpolation on Ffuse to obtain a feature V5 (Q5, K5, and V5 have a same size). Then the injection module for B5 may multiply Q5 by K5, and then add a multiplication result to V5 to obtain a feature A5. Finally, the injection module for B5 may perform reparameterized convolution processing on A5 to obtain the feature P5.

More specifically, an injection module of a second structure (an enhanced injection module) may obtain the enhanced first feature and the enhanced second feature in the following manner:

(1) After obtaining the first fusion result, the injection module for the first feature may first perform preprocessing (cross-layer information fusion) on the first feature based on the second feature to obtain a preprocessed first feature.

It should be noted that the injection module for the first feature may align the second feature with the first feature (to be specific, perform linear interpolation on the second feature) to obtain an eighteenth feature, and perform pointwise convolution on the first feature to obtain a nineteenth feature. Then the injection module for the first feature may splice the eighteenth feature and the nineteenth feature to obtain a twentieth feature. Then the injection module for the first feature may perform pointwise convolution on the twentieth feature to obtain a twenty-first feature, namely, the preprocessed first feature.

After obtaining the preprocessed first feature, the injection module for the first feature may process the first fusion result and the preprocessed first feature based on a cross-attention mechanism to obtain the enhanced first feature. It should be noted that the injection module may perform pointwise convolution on the preprocessed first feature to obtain a sixth feature. In addition, the injection module may further perform pointwise convolution and activation function-based processing on the first fusion result to obtain a seventh feature. In addition, the injection module may further perform pointwise convolution only on the first fusion result to obtain an eighth feature (in this way, a size of the sixth feature, a size of the seventh feature, and a size of the eighth feature are the same). Then the injection module may multiply the sixth feature by the seventh feature to obtain a ninth feature, and add the eighth feature to the ninth feature to obtain a tenth feature. Finally, the injection module performs reparameterized convolution-based processing on the tenth feature to obtain an eleventh feature, namely, the enhanced first feature.

(2) After obtaining the first fusion result, the injection module for the second feature may first perform preprocessing (cross-layer information fusion) on the second feature based on the first feature to obtain a preprocessed second feature. It should be noted that the injection module for the second feature may align the first feature with the second feature (to be specific, perform pooling on the first feature) to obtain a twenty-second feature, and perform pointwise convolution on the second feature to obtain a twenty-third feature. Then the injection module for the second feature may splice the twenty-second feature and the twenty-third feature to obtain a twenty-fourth feature. Then the injection module for the second feature may perform pointwise convolution on the twenty-fourth feature to obtain a twenty-fifth feature, namely, the preprocessed second feature.

After obtaining the preprocessed second feature, the injection module for the second feature may process the first fusion result and the preprocessed second feature based on the cross-attention mechanism to obtain the enhanced second feature. It should be noted that the injection module may perform pointwise convolution on the preprocessed second feature to obtain a twelfth feature. In addition, the injection module may further perform pointwise convolution, activation function-based processing, and linear interpolation on the first fusion result to obtain a thirteenth feature. In addition, the injection module may further perform pointwise convolution and linear interpolation only on the first fusion result to obtain a fourteenth feature (in this way, a size of the twelfth feature, a size of the thirteenth feature, and a size of the fourteenth feature are the same). Then the injection module may multiply the twelfth feature by the thirteenth feature to obtain a fifteenth feature, and add the fourteenth feature to the fifteenth feature to obtain a sixteenth feature. Finally, the injection module performs reparameterized convolution-based processing on the sixteenth feature to obtain a seventeenth feature, namely, the enhanced second feature.

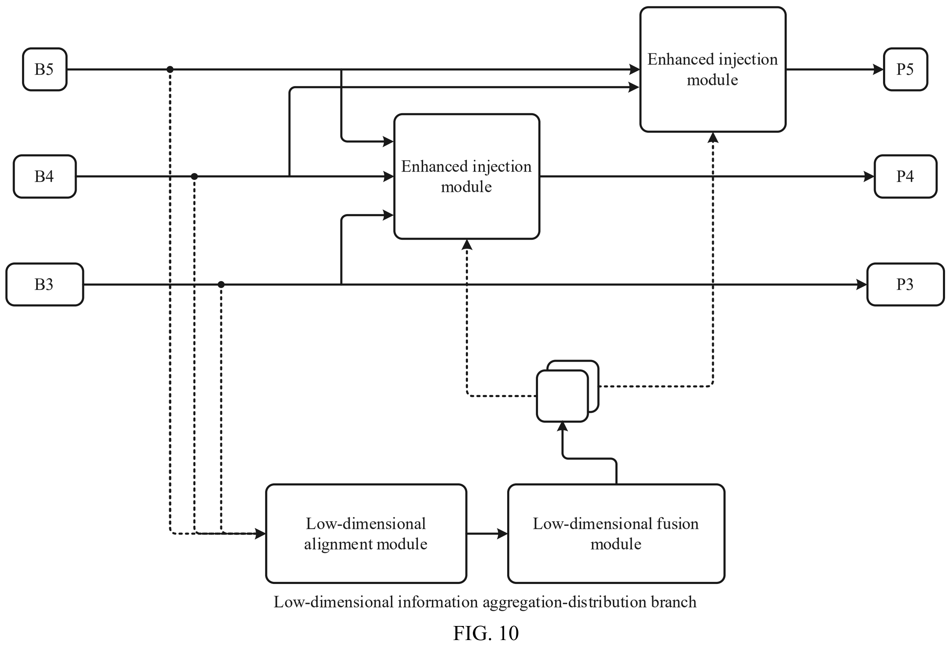

Still in the foregoing example, as shown in FIG. 10 (FIG. 10 is a diagram of another structure of a target model according to an embodiment of this application), it is assumed that the low-dimensional information aggregation-distribution branch includes a low-dimensional alignment module, a low-dimensional fusion module, and an enhanced injection module. In this case, an input of the injection module for B4 includes not only B4 and Ffuse, but also B5 and B3; and an input of the injection module for B5 includes not only B5 and Ffuse, but also B4.

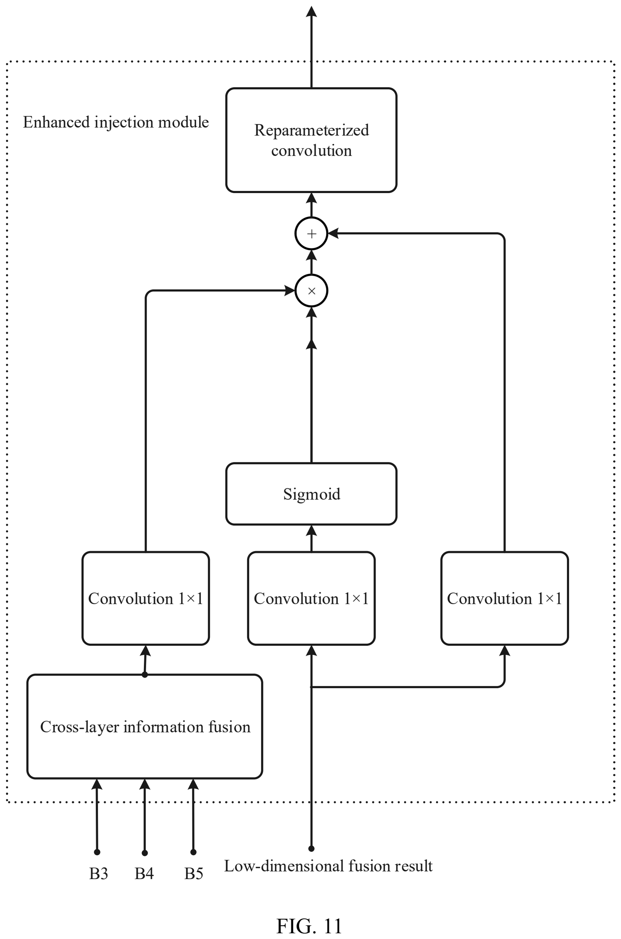

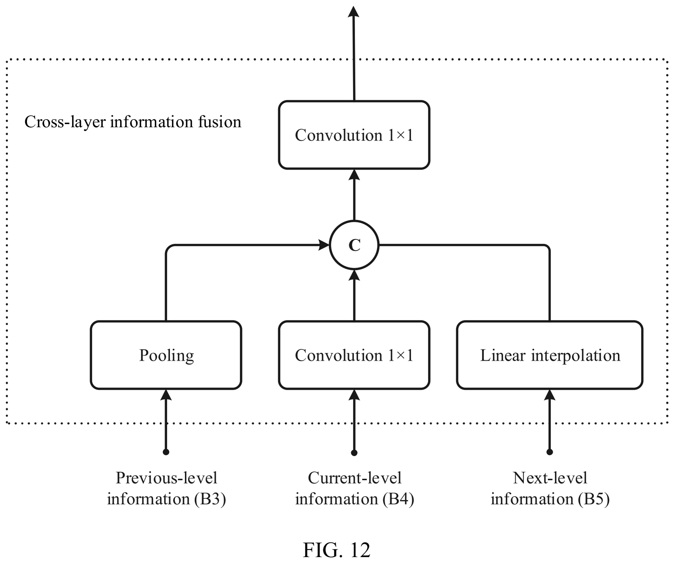

As shown in FIG. 11 and FIG. 12 (FIG. 11 is a diagram of a structure of an enhanced injection module according to an embodiment of this application, and FIG. 12 is a diagram of cross-layer information fusion processing according to an embodiment of this application), after obtaining Ffuse, the injection module for B4 may first perform cross-layer information fusion processing on B3, B4, and B5. To be specific, the injection module for B4 first performs pointwise convolution on B4 to obtain a feature C4, pools B3 to obtain a feature C3, and performs linear interpolation on B5 to obtain a feature C5. Then the injection module for B4 may perform splicing and pointwise convolution on C3, C4, and C5 to obtain a feature C4'.

After obtaining C4', the injection module for B4 may perform pointwise convolution on C4' to obtain a feature Q4. In addition, the injection module for B4 may further perform pointwise convolution and activation function-based processing on Ffuse to obtain a feature K4. In addition, the injection module for B4 may further perform pointwise convolution on Ffuse to obtain a feature V4 (Q4, K4, and V4 have a same size). Then the injection module for B4 may multiply Q4 by K4, and then add a multiplication result to V4 to obtain a feature A4. Finally, the injection module for B4 may perform reparameterized convolution processing on A4 to obtain the feature P4.

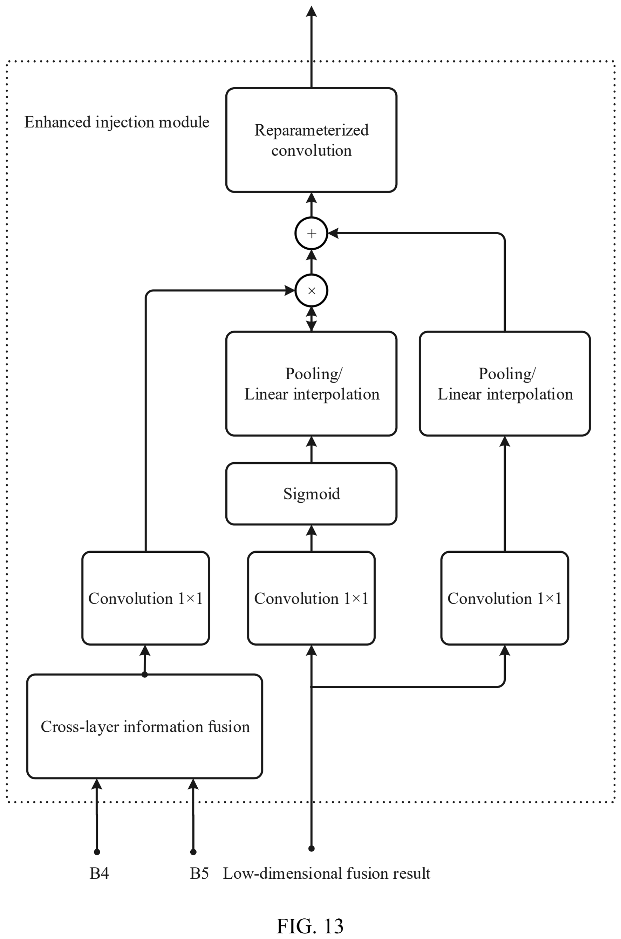

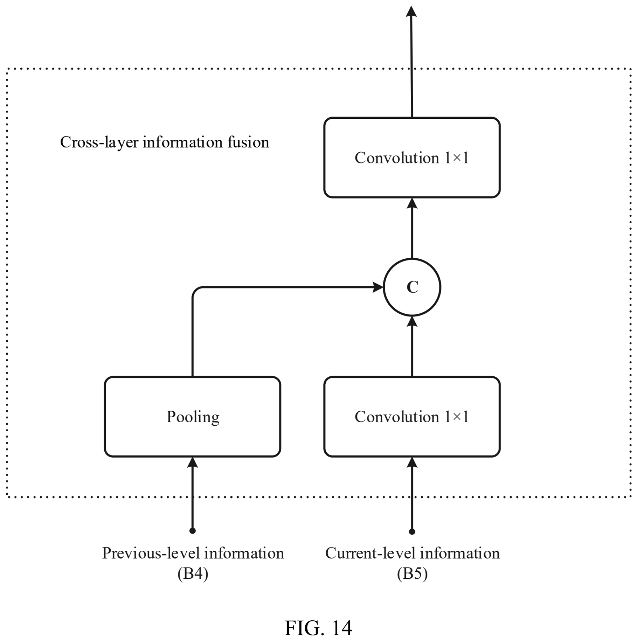

As shown in FIG. 13 and FIG. 14 (FIG. 13 is a diagram of another structure of an enhanced injection module according to an embodiment of this application, and FIG. 14 is another diagram of cross-layer information fusion processing according to an embodiment of this application), after obtaining Ffuse, the injection module for B5 may first perform cross-layer information fusion processing on B4 and B5. To be specific, the injection module for B5 performs pointwise convolution on B5 to obtain a feature D5, and pools B4 to obtain a feature D4. Then the injection module for B5 may perform splicing and pointwise convolution on D5 and D4 to obtain a feature D5'.

After obtaining D5', the injection module for B5 may first perform pointwise convolution on D5' to obtain a feature Q5. In addition, the injection module for B5 may further perform pointwise convolution, activation function-based processing, and linear interpolation on Ffuse to obtain a feature K5. In addition, the injection module for B5 may further perform pointwise convolution and linear interpolation on Ffuse to obtain a feature V5 (Q5, K5, and V5 have a same size). Then the injection module for B5 may multiply Q5 by K5, and then add a multiplication result to V5 to obtain a feature A5. Finally, the injection module for B5 may perform reparameterized convolution processing on A5 to obtain the feature P5.

505: Obtain location information of the object in the target image based on the enhanced first feature and the enhanced second feature.

After obtaining the enhanced first feature and the enhanced second feature, the target model may perform detection by using the enhanced first feature and the enhanced second feature to obtain the location information of the object in the target image, to be specific, coordinates of the object in an image coordinate system (constructed based on the target image), and output the location information. This is equivalent to obtaining a location of the object in the scene.

Specifically, the target model may obtain the location information of the object in the target image in the following manner:

After obtaining the enhanced first feature and the enhanced second feature, the object detection head may perform processing (for example, convolution or full connection) on the enhanced first feature and the enhanced second feature to obtain the location information of the object in the target image.

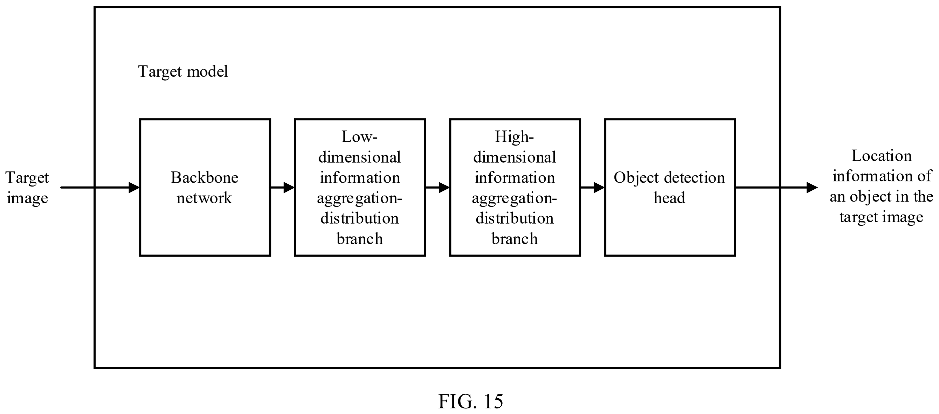

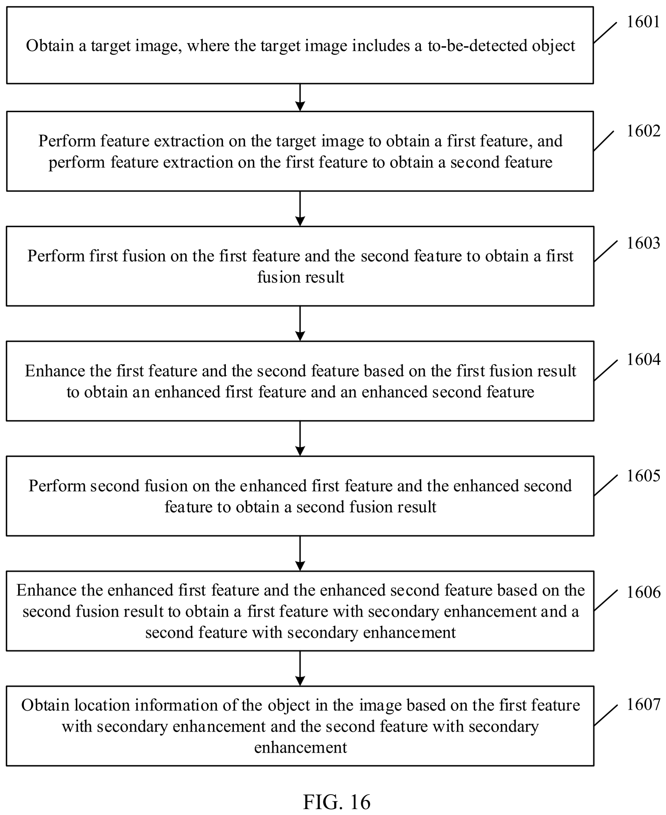

The foregoing describes in detail the target model of the first structure, and the following describes a target model of a second structure. FIG. 15 is a diagram of another structure of a target model according to an embodiment of this application. As shown in FIG. 15, the target model includes a backbone network, a low-dimensional information aggregation-distribution branch, a high-dimensional information aggregation-distribution branch, and an object detection head. An input end of the backbone network serves as an input end of the entire target model. An output end of the backbone network is connected to an input end of the low-dimensional information aggregation-distribution branch. An output end of the low-dimensional information aggregation-distribution branch is connected to an input end of the high-dimensional information aggregation-distribution branch. An output end of the high-dimensional information aggregation-distribution branch is connected to an input end of the object detection head. An output end of the object detection head serves as an output end of the entire target model. For further understanding of an operating process of the target model, the following further describes the operating process. FIG. 16 is a schematic flowchart of an item recommendation method according to an embodiment of this application. As shown in FIG. 16, the method includes the following steps.

1601: Obtain a target image, where the target image includes a to-be-detected object.

1602: Perform feature extraction on the target image to obtain a first feature, and perform feature extraction on the first feature to obtain a second feature.

1603: Perform first fusion on the first feature and the second feature to obtain a first fusion result.

1604: Enhance the first feature and the second feature based on the first fusion result to obtain an enhanced first feature and an enhanced second feature.

For descriptions of step 1601 to step 1604, refer to a related description part of step 501 to step 504 in the embodiment shown in FIG. 5. Details are not described herein again.

1605: Perform second fusion on the enhanced first feature and the enhanced second feature to obtain a second fusion result.

After obtaining the enhanced first feature and the enhanced second feature, the target model may perform second fusion (another feature fusion manner) on the enhanced first feature and the enhanced second feature to obtain the second fusion result.

Specifically, the target model may obtain the first fusion result in the following manner:

After obtaining the enhanced first feature and the enhanced second feature, the high-dimensional information aggregation-distribution branch may first align the first feature with the second feature to obtain a twenty-sixth feature. It can be understood that a size of the second feature is the same as a size of the twenty-sixth feature. Then the high-dimensional information aggregation-distribution branch may splice the second feature and the twenty-sixth feature to obtain a twenty-seventh feature. Then the high-dimensional information aggregation-distribution branch may perform self-attention-based processing, feedforward network-based processing, and addition on the twenty-seventh feature to obtain the twenty-eighth feature, namely, the second fusion result.

It should be understood that the high-dimensional information aggregation-distribution branch is configured to obtain high-dimensional global information of the target image, namely, structural features of the target image, and sizes of the features are usually small. In this case, during feature alignment, the branch tends to use a feature with a small size as an alignment criterion. To be specific, the branch usually uses the second feature as an alignment criterion. Therefore, the branch usually aligns the first feature with the second feature.

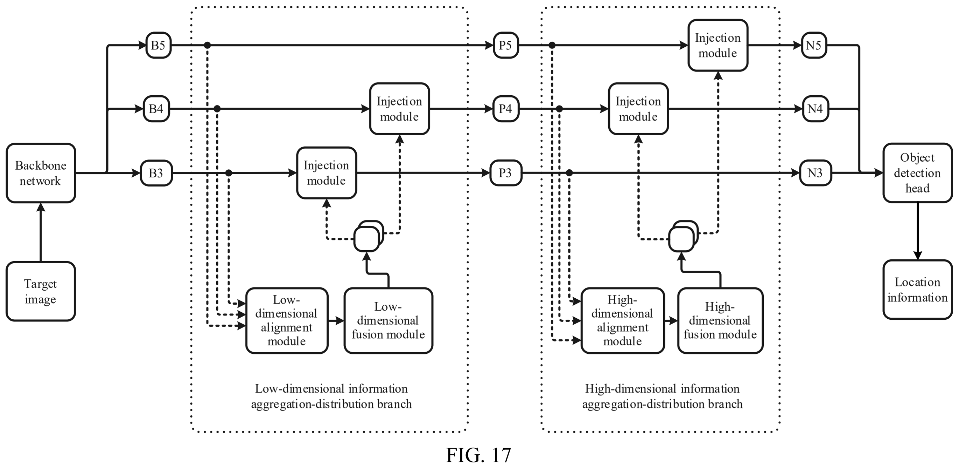

For example, as shown in FIG. 17 (FIG. 17 is another diagram of a target model according to an embodiment of this application), it is assumed that the target model includes a backbone network, a low-dimensional information aggregation-distribution branch, a high-dimensional information aggregation-distribution branch, and an object detection head. After the backbone network outputs B3, B4, and B5 to the low-dimensional information aggregation-distribution branch, the low-dimensional information aggregation-distribution branch may output P3, P4, and P5 to the high-dimensional information aggregation-distribution branch. A size of P3 is greater than a size of P4, and the size of P4 is greater than a size of P5.

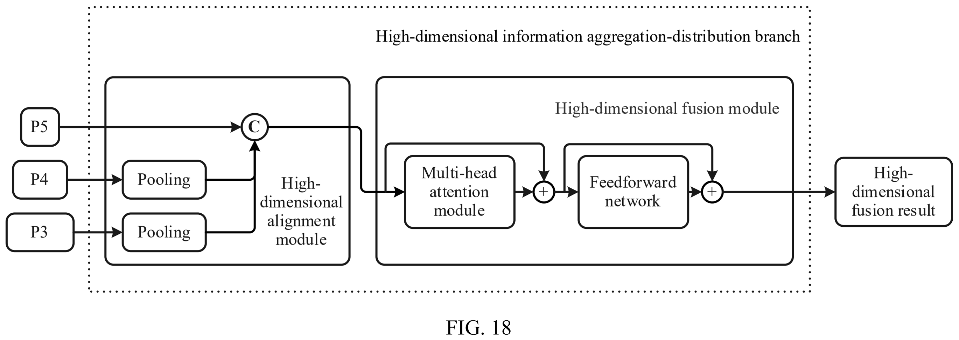

The high-dimensional information aggregation-distribution branch includes a high-dimensional alignment module, a high-dimensional fusion module, and an injection module. As shown in FIG. 18 (FIG. 18 is a diagram of a structure of a high-dimensional alignment module and a high-dimensional fusion module according to an embodiment of this application), the high-dimensional alignment module may pool P3 and P4 by using P5 as an alignment criterion, to reduce sizes of P3 and P4, to obtain features P3' and P4' aligned with P5, where a size of P3, a size of P4', and a size of P5 are the same. In this case, the high-dimensional alignment module may splice P3', P4', and P5 to obtain a splicing result Fu, and send Fu to the high-dimensional fusion module. Then the high-dimensional fusion module performs self-attention mechanism-based processing, feedforward network-based processing, and addition on Fc to obtain a high-dimensional fusion result F', and sends F' to the injection module.

1606: Enhance the enhanced first feature and the enhanced second feature based on the second fusion result to obtain a first feature with secondary enhancement and a second feature with secondary enhancement.

After obtaining the second fusion result, the target model may enhance the enhanced first feature and the enhanced second feature by using the second fusion result to obtain the first feature with secondary enhancement and the second feature with secondary enhancement.

Specifically, the target model may obtain the enhanced first feature and the enhanced second feature in a plurality of manners below:

(1) It is assumed that the high-dimensional information aggregation-distribution branch includes only an injection module for the first feature. The injection module for the first feature may inject the second fusion result into the enhanced first feature to perform data enhancement on the enhanced first feature, to obtain the first feature with secondary enhancement. Because the high-dimensional information aggregation-distribution branch does not include an injection module for the second feature, the branch may directly determine the enhanced second feature as the second feature with secondary enhancement without processing the enhanced second feature.

(2) It is assumed that the high-dimensional information aggregation-distribution branch includes an injection module for the first feature and an injection module for the second feature. The injection module for the first feature may inject the second fusion result into the enhanced first feature to perform data enhancement on the enhanced first feature, to obtain the first feature with secondary enhancement. Similarly, the injection module for the second feature may inject the second fusion result into the enhanced second feature to perform data enhancement on the enhanced second feature, to obtain the second feature with secondary enhancement.

(3) It is assumed that the high-dimensional information aggregation-distribution branch includes only an injection module for the second feature. Because the high-dimensional information aggregation-distribution branch does not include an injection module for the first feature, the branch may directly determine the enhanced first feature as the first feature with secondary enhancement without processing the enhanced first feature. The injection module for the second feature may inject the second fusion result into the enhanced second feature to perform data enhancement on the enhanced second feature, to obtain the second feature with secondary enhancement.

More specifically, the injection module may be of a plurality of structures. The following first describes an injection module of a first structure. The injection module (a general-type injection module) of the first structure may obtain the first feature with secondary enhancement and the second feature with secondary enhancement in the following manner:

(1) After obtaining the second fusion result, the injection module for the first feature may process the second fusion result and the enhanced first feature based on a cross-attention mechanism to obtain the first feature with secondary enhancement.

(2) After obtaining the second fusion result, the injection module for the second feature may process the second fusion result and the enhanced second feature based on the cross-attention mechanism to obtain the second feature with secondary enhancement.

More specifically, an injection module of a second structure (an enhanced injection module) may obtain the first feature with secondary enhancement and the second feature with secondary enhancement in the following manner:

(1) After obtaining the second fusion result, the injection module for the first feature may first perform preprocessing (cross-layer information fusion) on the enhanced first feature based on the enhanced second feature to obtain a preprocessed and enhanced first feature. After obtaining the preprocessed and enhanced first feature, the injection module for the first feature may process the second fusion result and the preprocessed and enhanced first feature based on a cross-attention mechanism to obtain the first feature with secondary enhancement.

(2) After obtaining the second fusion result, the injection module for the second feature may first perform preprocessing (cross-layer information fusion) on the enhanced second feature based on the enhanced first feature to obtain a preprocessed and enhanced second feature. After obtaining the preprocessed and enhanced second feature, the injection module for the second feature may process the second fusion result and the preprocessed and enhanced second feature based on the cross-attention mechanism to obtain the second feature with secondary enhancement.

For descriptions of step 1606, refer to a related description part of step 1604. Details are not described herein again.

1607: Obtain location information of the object in the image based on the first feature with secondary enhancement and the second feature with secondary enhancement.

After obtaining the first feature with secondary enhancement and the second feature with secondary enhancement, the target model may perform detection by using the first feature with secondary enhancement and the second feature with secondary enhancement to obtain the location information of the object in the target image, to be specific, coordinates of the object in an image coordinate system (constructed based on the target image), and output the location information. This is equivalent to obtaining a location of the object in the scene.

Specifically, the target model may obtain the location information of the object in the target image in the following manner:

After obtaining the first feature with secondary enhancement and the second feature with secondary enhancement, the object detection head may perform processing (for example, convolution or full connection) on the first feature with secondary enhancement and second-the enhanced second feature to obtain the location information of the object in the target image.

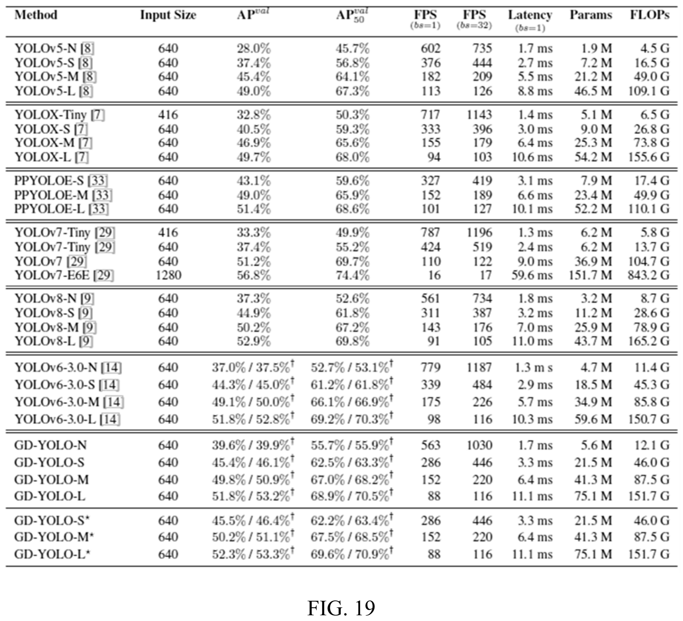

In addition, the target model (for example, GD-YOLO in FIG. 19) provided in embodiments of this application may be further compared with a model (for example, YOLO in FIG. 19) in the related technology. A comparison result is shown in FIG. 19 (FIG. 19 is a diagram of a comparison result according to an embodiment of this application). It can be learned from a table shown in FIG. 19 that performance of the target model provided in embodiments of this application is higher than performance of the model in the related technology.

In embodiments of this application, when object detection needs to be performed, a target image including a to-be-detected object may be obtained, and the target image is input to the target model. Then the target model may perform feature extraction on the target image to obtain a first feature, and further perform feature extraction on the first feature to obtain a second feature. Then the target model may perform first fusion on the first feature and the second feature to obtain a first fusion result. Then the target model may enhance the first feature and the second feature based on the first fusion result to obtain an enhanced first feature and an enhanced second feature. Finally, the target model may perform detection by using the enhanced first feature and the enhanced second feature to obtain location information of the object in the target image. In this case, object detection is completed. In the foregoing process, the target model obtains the location information of the object in the target image based on the enhanced first feature and the enhanced second feature, where the enhanced first feature is obtained based on the first feature and the first fusion result, the enhanced second feature is obtained based on the second feature and the first fusion result, the first feature and the second feature represent different local information of the target image, and the first fusion result represents low-dimensional global information of the target image. Therefore, the target model considers comprehensive factors during object detection, and the location information of the object that is finally output by the target model is sufficiently accurate, so that object detection can be accurately completed.

Further, in embodiments of this application, the target model may alternatively fuse the enhanced first feature and the enhanced second feature to obtain a second fusion result, continue to enhance the enhanced first feature and the enhanced second feature based on the second fusion result to obtain a second feature with secondary enhancement and a second feature with secondary enhancement, and then obtain location information of the object in the target image based on the second feature with secondary enhancement and the second feature with secondary enhancement. The first feature and the second feature represent different local information of the target image, the first fusion result represents low-dimensional global information of the target image, and the second fusion result represents high-dimensional global information of the target image. Therefore, the target model considers more comprehensive factors during object detection, and the location information of the object that is finally output by the target model can be more accurate, so that object detection can be more correctly completed.

Further, in embodiments of this application, the target model includes a low-dimensional information aggregation-distribution branch and a high-dimensional information aggregation-distribution branch. The two branches include an injection module for the first feature and/or an injection module for the second feature. A quantity of injection modules may be selected. This not only can ensure accuracy of object detection performed by the target model, but also can ensure a speed of the object detection performed by the target model. A flexible manner of selecting injection modules can achieve a balance between the accuracy and the speed of the object detection.

Further, in embodiments of this application, the injection module may be of a plurality of structures. A general-type injection module may inject a feature fusion result into features at different levels, to improve utilization of global information and local information of the model, and therefore improve performance of the target model. An enhanced injection module not only can inject a feature fusion result into features at different levels, but also can fuse a feature at an adjacent level and a feature at a current level, to enhance flow and fusion of cross-layer information. This helps further improve performance of the target model.

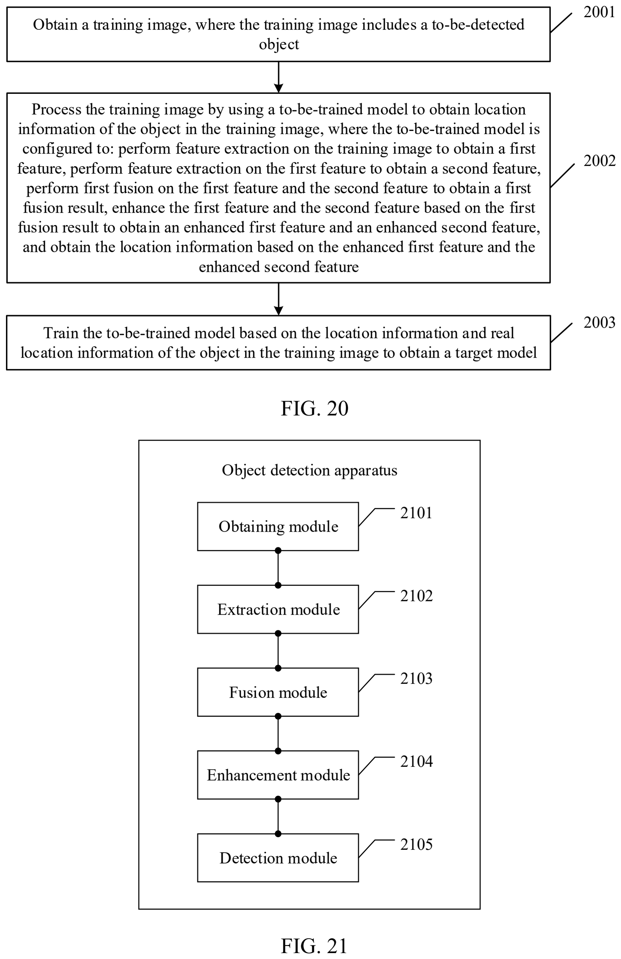

The foregoing describes in detail the object detection method provided in embodiments of this application. The following describes the model training method provided in embodiments of this application. FIG. 20 is a schematic flowchart of a model training method according to an embodiment of this application. As shown in FIG. 20, the method includes the following steps.

2001: Obtain a training image, where the training image includes a to-be-detected object.

In this embodiment, when a to-be-trained model needs to be trained, a batch of training data may be first obtained, where the batch of training data includes the training image, and the training image includes the to-be-detected object. It should be noted that real location information of the to-be-detected object in the training image is known.

2002: Process the training image by using the to-be-trained model to obtain location information of the object in the training image, where the to-be-trained model is configured to: perform feature extraction on the training image to obtain a first feature, perform feature extraction on the first feature to obtain a second feature, perform first fusion on the first feature and the second feature to obtain a first fusion result, enhance the first feature and the second feature based on the first fusion result to obtain an enhanced first feature and an enhanced second feature, and obtain the location information based on the enhanced first feature and the enhanced second feature.

After the training image is obtained, the training image may be input to the to-be-trained model. In this case, the to-be-trained model may first perform feature extraction on the training image to obtain the first feature, and perform feature extraction on the first feature to obtain the second feature. Then the to-be-trained model may perform first fusion on the first feature and the second feature to obtain the first fusion result. Then the to-be-trained model may enhance the first feature and the second feature based on the first fusion result to obtain the enhanced first feature and the enhanced second feature. Finally, the to-be-trained model may obtain the (predicted) location information of the object in the training image based on the enhanced first feature and the enhanced second feature.

In a possible implementation, the to-be-trained model is configured to: inject the first fusion result into the first feature to obtain the enhanced first feature, and determine the second feature as the enhanced second feature; or inject the first fusion result into the first feature to obtain the enhanced first feature, and inject the first fusion result into the second feature to obtain the enhanced second feature; or determine the first feature as the enhanced first feature, and inject the first fusion result into the second feature to obtain the enhanced second feature.

In a possible implementation, the to-be-trained model is configured to process the first fusion result and the first feature based on a cross-attention mechanism to obtain the enhanced first feature.

In a possible implementation, the to-be-trained model is configured to process the first fusion result and the second feature based on the cross-attention mechanism to obtain the enhanced second feature.

In a possible implementation, the to-be-trained model is further configured to preprocess the first feature based on the second feature to obtain a preprocessed first feature, where the preprocessing includes at least one of the following: alignment, splicing, or convolution; and the to-be-trained model is configured to process the first fusion result and the preprocessed first feature based on the cross-attention mechanism to obtain the enhanced first feature.

In a possible implementation, the to-be-trained model is further configured to preprocess the second feature based on the first feature to obtain a preprocessed second feature, where the preprocessing includes at least one of the following: alignment, splicing, or convolution; and the to-be-trained model is configured to process the first fusion result and the preprocessed second feature based on the cross-attention mechanism to obtain the enhanced second feature.

In a possible implementation, the first fusion includes at least one of the following: alignment, splicing, or convolution.

In a possible implementation, the to-be-trained model is further configured to perform second fusion on the enhanced first feature and the enhanced second feature to obtain a second fusion result; and the to-be-trained model is configured to: enhance, based on the second fusion result, the enhanced first feature and the enhanced second feature to obtain a first feature with secondary enhancement and a second feature with secondary enhancement; and obtain the location information of the object in the training image based on the first feature with secondary enhancement and the second feature with secondary enhancement.

In a possible implementation, the second fusion includes at least one of the following: alignment, splicing, self-attention mechanism-based processing, feedforward network-based processing, or addition.

For descriptions of step 2002, refer to a related description part in the embodiment shown in FIG. 5 and the embodiment shown in FIG. 16. Details are not described herein again.

2003: Train the to-be-trained model based on the location information and the real location information of the object in the training image to obtain a target model.

After the (predicted) location information of the object in the training image is obtained, because the real location information of the object in the training image is known, calculation may be performed on the location information of the object in the training image and the real location information of the object in the training image by using a preset loss function, to obtain a target loss. The target loss indicates a difference between the location information of the object in the training image and the real location information of the object in the training image. After the target loss is obtained, a parameter of the to-be-trained model may be updated based on the target loss to obtain a to-be-trained model with an updated parameter, and the to-be-trained model with the updated parameter is further trained by using a next batch of training data until a model training condition is met (for example, the target loss converges), to obtain the target model in the embodiment shown in FIG. 5 or FIG. 16.

The target model obtained through training in this embodiment of this application has an object detection function. When object detection needs to be performed, a target image including a to-be-detected object may be obtained, and the target image is input to the target model. Then the target model may perform feature extraction on the target image to obtain a first feature, and further perform feature extraction on the first feature to obtain a second feature. Then the target model may perform first fusion on the first feature and the second feature to obtain a first fusion result. Then the target model may enhance the first feature and the second feature based on the first fusion result to obtain an enhanced first feature and an enhanced second feature. Finally, the target model may perform detection by using the enhanced first feature and the enhanced second feature to obtain location information of the object in the target image. In this case, object detection is completed. In the foregoing process, the target model obtains the location information of the object in the target image based on the enhanced first feature and the enhanced second feature, where the enhanced first feature is obtained based on the first feature and the first fusion result, the enhanced second feature is obtained based on the second feature and the first fusion result, the first feature and the second feature represent different local information of the target image, and the first fusion result represents low-dimensional global information of the target image. Therefore, the target model considers comprehensive factors during object detection, and the location information of the object that is finally output by the target model is sufficiently accurate, so that object detection can be accurately completed.

The foregoing describes in detail the object detection method and the model training method provided in embodiments of this application. The following describes an object detection apparatus and a model training apparatus provided in embodiments of this application. FIG. 21 is a diagram of a structure of an object detection apparatus according to an embodiment of this application. As shown in FIG. 21, the apparatus includes:

> an obtaining module 2101, configured to obtain a target image, where the target image includes a to-be-detected object;
> an extraction module 2102, configured to perform feature extraction on the target image to obtain a first feature, and perform feature extraction on the first feature to obtain a second feature;
> a fusion module 2103, configured to perform first fusion on the first feature and the second feature to obtain a first fusion result;
> an enhancement module 2104, configured to enhance the first feature and the second feature based on the first fusion result to obtain an enhanced first feature and an enhanced second feature; and
> a detection module 2105, configured to obtain location information of the object in the target image based on the enhanced first feature and the enhanced second feature.

In this embodiment of this application, when object detection needs to be performed, a target image including a to-be-detected object may be obtained, and the target image is input to a target model. Then the target model may perform feature extraction on the target image to obtain a first feature, and further perform feature extraction on the first feature to obtain a second feature. Then the target model may perform first fusion on the first feature and the second feature to obtain a first fusion result. Then the target model may enhance the first feature and the second feature based on the first fusion result to obtain an enhanced first feature and an enhanced second feature. Finally, the target model may perform detection by using the enhanced first feature and the enhanced second feature to obtain location information of the object in the target image. In this case, object detection is completed. In the foregoing process, the target model obtains the location information of the object in the target image based on the enhanced first feature and the enhanced second feature, where the enhanced first feature is obtained based on the first feature and the first fusion result, the enhanced second feature is obtained based on the second feature and the first fusion result, the first feature and the second feature represent different local information of the target image, and the first fusion result represents low-dimensional global information of the target image. Therefore, the target model considers comprehensive factors during object detection, and the location information of the object that is finally output by the target model is sufficiently accurate, so that object detection can be accurately completed.

In a possible implementation, the enhancement module 2104 is configured to: inject the first fusion result into the first feature to obtain the enhanced first feature, and determine the second feature as the enhanced second feature; or

inject the first fusion result into the first feature to obtain the enhanced first feature, and inject the first fusion result into the second feature to obtain the enhanced second feature; or determine the first feature as the enhanced first feature, and inject the first fusion result into the second feature to obtain the enhanced second feature.

In a possible implementation, the enhancement module 2104 is configured to process the first fusion result and the first feature based on a cross-attention mechanism to obtain the enhanced first feature.

In a possible implementation, the enhancement module 2104 is configured to process the first fusion result and the second feature based on the cross-attention mechanism to obtain the enhanced second feature.

In a possible implementation, the apparatus further includes: a first preprocessing model, configured to preprocess the first feature based on the second feature to obtain a preprocessed first feature, where the preprocessing includes at least one of the following: alignment, splicing, or convolution. The enhancement module 2104 is configured to process the first fusion result and the preprocessed first feature based on the cross-attention mechanism to obtain the enhanced first feature.

In a possible implementation, the apparatus further includes: a second preprocessing module, configured to preprocess the second feature based on the first feature to obtain a preprocessed second feature, where the preprocessing includes at least one of the following: alignment, splicing, or convolution. The enhancement module 2104 is configured to process the first fusion result and the preprocessed second feature based on the cross-attention mechanism to obtain the enhanced second feature.

In a possible implementation, the first fusion includes at least one of the following: alignment, splicing, or convolution.

In a possible implementation, the apparatus further includes: a second fusion module, configured to perform second fusion on the enhanced first feature and the enhanced second feature to obtain a second fusion result. The detection module 2105 is configured to: enhance, based on the second fusion result, the enhanced first feature and the enhanced second feature to obtain a first feature with secondary enhancement and a second feature with secondary enhancement; and obtain the location information of the object in the target image based on the first feature with secondary enhancement and the second feature with secondary enhancement.

In a possible implementation, the second fusion includes at least one of the following: alignment, splicing, self-attention mechanism-based processing, feedforward network-based processing, or addition.

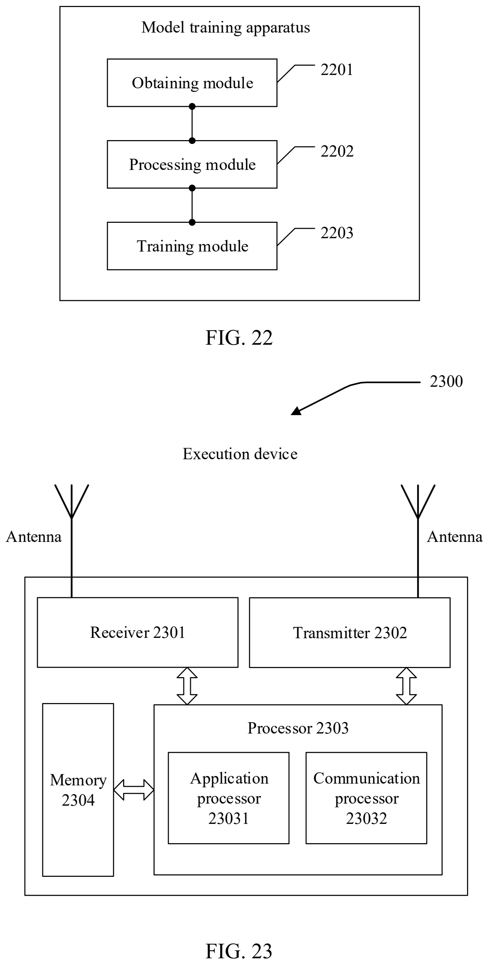

FIG. 22 is a diagram of a structure of a model training apparatus according to an embodiment of this application. As shown in FIG. 22, the apparatus includes:

> an obtaining module 2201, configured to obtain a training image, where the training image includes a to-be-detected object;
> a processing module 2202, configured to process the training image by using a to-be-trained model to obtain location information of the object in the training image, where the to-be-trained model is configured to: perform feature extraction on the training image to obtain a first feature, perform feature extraction on the first feature to obtain a second feature, perform first fusion on the first feature and the second feature to obtain a first fusion result, enhance the first feature and the second feature based on the first fusion result to obtain an enhanced first feature and an enhanced second feature, and obtain the location information based on the enhanced first feature and the enhanced second feature; and
> a training module 2203, configured to train the to-be-trained model based on the location information and real location information of the object in the training image to obtain a target model.

The target model obtained through training in this embodiment of this application has an object detection function. When object detection needs to be performed, a target image including a to-be-detected object may be obtained, and the target image is input to the target model. Then the target model may perform feature extraction on the target image to obtain a first feature, and further perform feature extraction on the first feature to obtain a second feature. Then the target model may perform first fusion on the first feature and the second feature to obtain a first fusion result. Then the target model may enhance the first feature and the second feature based on the first fusion result to obtain an enhanced first feature and an enhanced second feature. Finally, the target model may perform detection by using the enhanced first feature and the enhanced second feature to obtain location information of the object in the target image. In this case, object detection is completed. In the foregoing process, the target model obtains the location information of the object in the target image based on the enhanced first feature and the enhanced second feature, where the enhanced first feature is obtained based on the first feature and the first fusion result, the enhanced second feature is obtained based on the second feature and the first fusion result, the first feature and the second feature represent different local information of the target image, and the first fusion result represents low-dimensional global information of the target image. Therefore, the target model considers comprehensive factors during object detection, and the location information of the object that is finally output by the target model is sufficiently accurate, so that object detection can be accurately completed.

In a possible implementation, the to-be-trained model is configured to: inject the first fusion result into the first feature to obtain the enhanced first feature, and determine the second feature as the enhanced second feature; or inject the first fusion result into the first feature to obtain the enhanced first feature, and inject the first fusion result into the second feature to obtain the enhanced second feature; or determine the first feature as the enhanced first feature, and inject the first fusion result into the second feature to obtain the enhanced second feature.

In a possible implementation, the to-be-trained model is configured to process the first fusion result and the first feature based on a cross-attention mechanism to obtain the enhanced first feature.

In a possible implementation, the to-be-trained model is configured to process the first fusion result and the second feature based on the cross-attention mechanism to obtain the enhanced second feature.

In a possible implementation, the to-be-trained model is further configured to preprocess the first feature based on the second feature to obtain a preprocessed first feature, where the preprocessing includes at least one of the following: alignment, splicing, or convolution; and the to-be-trained model is configured to process the first fusion result and the preprocessed first feature based on the cross-attention mechanism to obtain the enhanced first feature.

In a possible implementation, the to-be-trained model is further configured to preprocess the second feature based on the first feature to obtain a preprocessed second feature, where the preprocessing includes at least one of the following: alignment, splicing, or convolution; and the to-be-trained model is configured to process the first fusion result and the preprocessed second feature based on the cross-attention mechanism to obtain the enhanced second feature.

In a possible implementation, the first fusion includes at least one of the following: alignment, splicing, or convolution.

In a possible implementation, the to-be-trained model is further configured to perform second fusion on the enhanced first feature and the enhanced second feature to obtain a second fusion result; and the to-be-trained model is configured to: enhance, based on the second fusion result, the enhanced first feature and the enhanced second feature to obtain a first feature with secondary enhancement and a second feature with secondary enhancement; and obtain the location information of the object in the training image based on the first feature with secondary enhancement and the second feature with secondary enhancement.

In a possible implementation, the second fusion includes at least one of the following: alignment, splicing, self-attention mechanism-based processing, feedforward network-based processing, or addition.

It should be noted that content such as information exchange and an execution process between the modules/units of the foregoing apparatuses is based on the same concept as that of the method embodiments of this application, and achieves the same technical effects as those of the method embodiments of this application. For specific content, refer to the foregoing descriptions in the method embodiments of this application. Details are not described herein again.

An embodiment of this application further relates to an execution device. FIG. 23 is a diagram of a structure of an execution device according to an embodiment of this application. As shown in FIG. 23, the execution device 2300 may be specifically a mobile phone, a tablet computer, a notebook computer, an intelligent wearable device, a server, or the like. This is not limited herein. The object detection apparatus described in the embodiment corresponding to FIG. 21 may be deployed on the execution device 2300, to implement the object detection function in the embodiment corresponding to FIG. 5 or FIG. 16. Specifically, the execution device 2300 includes a receiver 2301, a transmitter 2302, a processor 2303 (there may be one or more processors 2303 in the execution device 2300, and one processor is used as an example in FIG. 23), and a memory 2304. The processor 2303 may include an application processor 23031 and a communication processor 23032. In some embodiments of this application, the receiver 2301, the transmitter 2302, the processor 2303, and the memory 2304 may be connected through a bus or in another manner.

The memory 2304 may include a read-only memory and a random access memory, and provide instructions and data for the processor 2303. A part of the memory 2304 may further include a non-volatile random access memory (non-volatile random access memory, NVRAM). The memory 2304 stores processor and operation instructions, an executable module, or a data structure, or a subset thereof, or an extended set thereof. The operation instructions may include various operation instructions for implementing various operations.

The processor 2303 controls an operation of the execution device. During specific application, the components of the execution device are coupled together through a bus system. In addition to a data bus, the bus system may further include a power bus, a control bus, a status signal bus, and the like. However, for clarity of description, various buses are referred to as the bus system in the figure.

The methods disclosed in the foregoing embodiments of this application may be applied to the processor 2303 or implemented by the processor 2303. The processor 2303 may be an integrated circuit chip and has a signal processing capability. During implementation, the steps of the foregoing methods may be performed by a hardware integrated logic circuit in the processor 2303 or by using instructions in a form of software. The processor 2303 may be a general-purpose processor, a digital signal processor (digital signal processor, DSP), a microprocessor, or a microcontroller. The processor 2303 may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 2303 may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory 2304, and the processor 2303 reads information in the memory 2304 and performs the steps of the foregoing methods in combination with hardware of the processor 2303.

The receiver 2301 may be configured to receive input digit or character information, and generate a signal input related to a related setting and function control of the execution device. The transmitter 2302 may be configured to output digit or character information through a first interface. The transmitter 2302 may be further configured to send instructions to a disk group through the first interface, to modify data in the disk group. The transmitter 2302 may further include a display device, for example, a display.

In this embodiment of this application, in a case, the processor 2303 is configured to perform object detection by using the target model in the embodiment corresponding to FIG. 5 or FIG. 16.

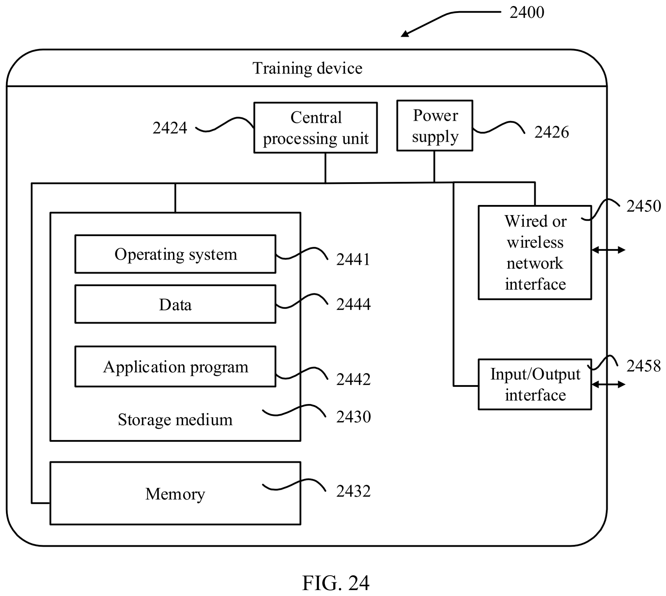

An embodiment of this application further relates to a training device. FIG. 24 is a diagram of a structure of a training device according to an embodiment of this application. As shown in FIG. 24, the training device 2400 is implemented by one or more servers. The training device 2400 may vary greatly due to different configurations or performance, and may include one or more central processing units (central processing units, CPU) 2424 (for example, one or more processors), a memory 2432, and one or more storage media 2430 (for example, one or more mass storage devices) for storing an application program 2442 or data 2444. The memory 2432 and the storage medium 2430 may perform transient storage or persistent storage. A program stored in the storage medium 2430 may include one or more modules (not shown in the figure), and each module may include a series of instruction operations for the training device. Further, the central processing unit 2424 may be configured to communicate with the storage medium 2430, and perform, on the training device 2400, a series of instruction operations in the storage medium 2430.

The training device 2400 may further include one or more power supplies 2426, one or more wired or wireless network interfaces 2450, one or more input/output interfaces 2458, or one or more operating systems 2441, for example, Windows Server™, Mac OS X™, Unix™, Linux™, or FreeBSD™.

Specifically, the training device may perform the model training method in the embodiment corresponding to FIG. 20, to obtain a target model.

An embodiment of this application further relates to a computer-readable storage medium. The computer-readable storage medium stores a program used for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or a terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, to enable a chip in the execution device to perform the data processing method described in the foregoing embodiments, or enable a chip in the training device to perform the data processing method described in the foregoing embodiments. Optionally, the storage unit is a storage unit in the chip, for example, a register or a buffer. Alternatively, the storage unit may be a storage unit in a radio access device but outside the chip, for example, a read-only memory (read-only memory, ROM), another type of static storage device that can store static information and instructions, or a random access memory (random access memory, RAM).

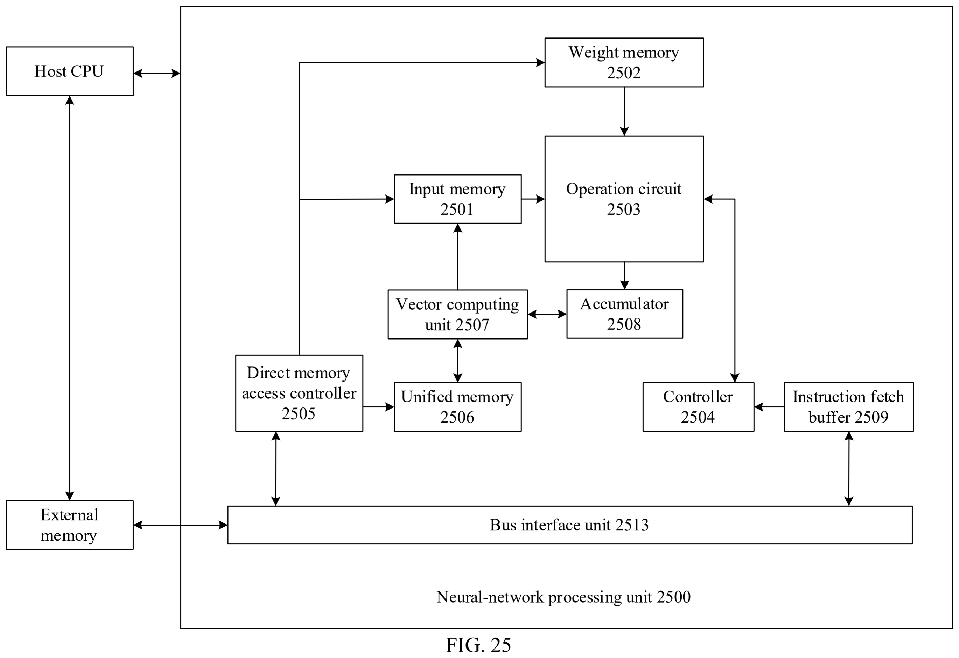

Specifically, FIG. 25 is a diagram of a structure of a chip according to an embodiment of this application. The chip may be represented by a neural-network processing unit NPU 2500. The NPU 2500 is mounted to a host CPU (Host CPU) as a coprocessor, and the host CPU assigns a task to the NPU 2500. A core part of the NPU is an operation circuit 2503. A controller 2504 controls the operation circuit 2503 to extract matrix data in a memory and perform a multiplication operation.

In some implementations, the operation circuit 2503 includes a plurality of process engines (Process Engine, PE). In some implementations, the operation circuit 2503 is a two-dimensional systolic array. The operation circuit 2503 may alternatively be a one-dimensional systolic array or another electronic circuit capable of performing mathematical operations such as multiplication and addition. In some implementations, the operation circuit 2503 is a general-purpose matrix processor.

For example, it is assumed that there is an input matrix A, a weight matrix B, and an output matrix C. The operation circuit fetches, from a weight memory 2502, data corresponding to the matrix B, and caches the data in each PE in the operation circuit. The operation circuit fetches data of the matrix A from an input memory 2501 to perform a matrix operation on the matrix B, and stores an obtained partial result or an obtained final result of the matrix in an accumulator (accumulator) 2508.

A unified memory 2506 is configured to store input data and output data. Weight data is directly transferred to the weight memory 2502 through a direct memory access controller (Direct Memory Access Controller, DMAC) 2505. Input data is also transferred to the unified memory 2506 through the DMAC.

A BIU is a bus interface unit, namely, a bus interface unit 2513, and is used for interaction between an AXI bus, and the DMAC and an instruction fetch buffer (Instruction Fetch Buffer, IFB) 2509.

The bus interface unit (Bus Interface Unit, BIU for short) 2513 is used for the instruction fetch buffer 2509 to obtain instructions from an external memory, and is further used for the direct memory access controller 2505 to obtain raw data of the input matrix A or the weight matrix B from the external memory.

The DMAC is mainly configured to transfer input data in the external memory DDR to the unified memory 2506, transfer weight data to the weight memory 2502, or transfer input data to the input memory 2501.

A vector computing unit 2507 includes a plurality of operation processing units, and if needed, performs further processing, for example, vector multiplication, vector addition, an exponential operation, a logarithmic operation, or magnitude comparison, on an output of the operation circuit 2503. The vector computing unit is mainly used for network computing, for example, batch normalization (batch normalization), pixel-level summation, or upsampling on a prediction label plane, at a non-convolutional/fully connected layer of a neural network.

In some implementations, the vector computing unit 2507 can store a processed output vector in the unified memory 2506. For example, the vector computing unit 2507 may apply a linear function or a nonlinear function to the output of the operation circuit 2503, for example, perform linear interpolation on a prediction label plane extracted at a convolutional layer. For another example, the vector computing unit 2507 may apply a linear function or a nonlinear function to a vector of an accumulated value, to generate an activation value. In some implementations, the vector computing unit 2507 generates a normalized value, a pixel-level summation value, or both a normalized value and a pixel-level summation value. In some implementations, the processed output vector can be used as an activation input for the operation circuit 2503, for example, used at a subsequent layer in the neural network.

The instruction fetch buffer (instruction fetch buffer) 2509 connected to the controller 2504 is configured to store instructions to be used by the controller 2504.

All of the unified memory 2506, the input memory 2501, the weight memory 2502, and the instruction fetch buffer 2509 are on-chip memories. The external memory is private for a hardware architecture of the NPU.

Any one of the processors mentioned above may be a general-purpose central processing unit, a microprocessor, an ASIC, or one or more integrated circuits for controlling execution of the foregoing programs.

In addition, it should be noted that the described apparatus embodiments are merely examples. The units described as separate components may or may not be physically separated, and components shown as units may or may not be physical units, to be specific, may be located in one place, or may be distributed on a plurality of network units. Some or all of the modules may be selected according to actual requirements to achieve the objectives of the solutions of embodiments. In addition, in the accompanying drawings of the apparatus embodiments provided in this application, a connection relationship between modules indicates that the modules have a communication connection, which may be specifically implemented as one or more communication buses or signal cables.

According to the descriptions of the foregoing implementations, a person skilled in the art can clearly understand that this application may be implemented by software in combination with necessary general-purpose hardware, or certainly may be implemented by dedicated hardware, including an application-specific integrated circuit, a dedicated CPU, a dedicated memory, a dedicated component, or the like. Usually, any function performed by a computer program may be easily implemented by corresponding hardware. In addition, a specific hardware structure used to implement a same function may be in various forms, for example, in a form of an analog circuit, a digital circuit, or a dedicated circuit. However, in this application, an implementation by using a software program is a better implementation in most cases. Based on such an understanding, the technical solutions of this application essentially or the part contributing to the conventional technology may be implemented in a form of a software product. The computer software product is stored in a readable storage medium, for example, a floppy disk of a computer, a USB flash drive, a removable hard disk drive, a ROM, a RAM, a magnetic disk, or a compact disc, and includes several instructions for instructing a computer device (which may be a personal computer, a training device, a network device, or the like) to perform all or some of methods in embodiments of this application.

All or some of the foregoing embodiments may be implemented by software, hardware, firmware, or any combination thereof. When the embodiments are implemented by software, all or some of the embodiments may be implemented in a form of a computer program product.

The computer program product includes one or more computer instructions. When the computer program instructions are loaded and executed on a computer, all or some of the processes or the functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored on a computer, or a data storage device, for example, a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive, SSD)), or the like.

**Claims**

1. An object detection method, wherein the method is implemented by a target model, and the method comprises:

   obtaining a target image, wherein the target image comprises a to-be-detected object;
   performing feature extraction on the target image to obtain a first feature, and performing feature extraction on the first feature to obtain a second feature;
   performing first fusion on the first feature and the second feature to obtain a first fusion result;
   enhancing the first feature and the second feature based on the first fusion result to obtain an enhanced first feature and an enhanced second feature; and
   obtaining location information of the object in the target image based on the enhanced first feature and the enhanced second feature.

2. The method according to claim 1, wherein enhancing, based on the first fusion result, the first feature and the second feature to obtain the enhanced first feature and the enhanced second feature comprises:

   injecting the first fusion result into the first feature to obtain the enhanced first feature, and determining the second feature as the enhanced second feature; or
   injecting the first fusion result into the first feature to obtain the enhanced first feature, and injecting the first fusion result into the second feature to obtain the enhanced second feature; or
   determining the first feature as the enhanced first feature, and injecting the first fusion result into the second feature to obtain the enhanced second feature.

3. The method according to claim 2, wherein injecting the first fusion result into the first feature to obtain the enhanced first feature comprises:
   processing the first fusion result and the first feature based on a cross-attention mechanism to obtain the enhanced first feature.

4. The method according to claim 2 or 3, wherein injecting the first fusion result into the second feature to obtain the enhanced second feature comprises:
   processing the first fusion result and the second feature based on the cross-attention mechanism to obtain the enhanced second feature.

5. The method according to claim 3, wherein the method further comprises:

   preprocessing the first feature based on the second feature to obtain a preprocessed first feature, wherein the preprocessing comprises at least one of the following: alignment, splicing, or convolution; and
   processing the first fusion result and the first feature based on the cross-attention mechanism to obtain the enhanced first feature comprises:
   processing the first fusion result and the preprocessed first feature based on the cross-attention mechanism to obtain the enhanced first feature.

6. The method according to claim 4, wherein the method further comprises:

   preprocessing the second feature based on the first feature to obtain a preprocessed second feature, wherein the preprocessing comprises at least one of the following: alignment, splicing, or convolution; and

processing the first fusion result and the second feature based on the cross-attention mechanism to obtain the enhanced second feature comprises:

processing the first fusion result and the preprocessed second feature based on the cross-attention mechanism to obtain the enhanced second feature.

7. The method according to any one of claims 1 to 6, wherein the first fusion comprises at least one of the following: alignment, splicing, or convolution.

8. The method according to any one of claims 1 to 7, wherein the method further comprises:

performing second fusion on the enhanced first feature and the enhanced second feature to obtain a second fusion result; and

obtaining the location information of the object in the target image based on the enhanced first feature and the enhanced second feature comprises:

enhancing, based on the second fusion result, the enhanced first feature and the enhanced second feature to obtain a first feature with secondary enhancement and a second feature with secondary enhancement; and

obtaining the location information of the object in the target image based on the first feature with secondary enhancement and the second feature with secondary enhancement.

9. The method according to claim 8, wherein the second fusion comprises at least one of the following: alignment, splicing, self-attention mechanism-based processing, feedforward network-based processing, or addition.

10. A model training method, wherein the method comprises:

obtaining a training image, wherein the training image comprises a to-be-detected object;

processing the training image by using a to-be-trained model to obtain location information of the object in the training image, wherein the to-be-trained model is configured to: perform feature extraction on the training image to obtain a first feature, perform feature extraction on the first feature to obtain a second feature, perform first fusion on the first feature and the second feature to obtain a first fusion result, enhance the first feature and the second feature based on the first fusion result to obtain an enhanced first feature and an enhanced second feature, and obtain the location information based on the enhanced first feature and the enhanced second feature; and

training the to-be-trained model based on the location information and real location information of the object in the training image to obtain a target model.

11. The method according to claim 10, wherein the to-be-trained model is configured to:

inject the first fusion result into the first feature to obtain the enhanced first feature, and determine the second feature as the enhanced second feature; or

inject the first fusion result into the first feature to obtain the enhanced first feature, and inject the first fusion result into the second feature to obtain the enhanced second feature; or

determine the first feature as the enhanced first feature, and inject the first fusion result into the second feature to obtain the enhanced second feature.

12. The method according to claim 11, wherein the to-be-trained model is configured to process the first fusion result and the first feature based on a cross-attention mechanism to obtain the enhanced first feature.

13. The method according to claim 11 or 12, wherein the to-be-trained model is configured to process the first fusion result and the second feature based on the cross-attention mechanism to obtain the enhanced second feature.

14. The method according to claim 12, wherein the to-be-trained model is further configured to preprocess the first feature based on the second feature to obtain a preprocessed first feature, wherein the preprocessing comprises at least one of the following: alignment, splicing, or convolution; and

the to-be-trained model is configured to process the first fusion result and the preprocessed first feature based on the cross-attention mechanism to obtain the enhanced first feature.

15. The method according to claim 13, wherein the to-be-trained model is further configured to preprocess the second feature based on the first feature to obtain a preprocessed second feature, wherein the preprocessing comprises at least one of the following: alignment, splicing, or convolution; and

the to-be-trained model is configured to process the first fusion result and the preprocessed second feature based on the cross-attention mechanism to obtain the enhanced second feature.

16. The method according to any one of claims 10 to 15, wherein the first fusion comprises at least one of the following: alignment, splicing, or convolution.

17. The method according to any one of claims 10 to 16, wherein the to-be-trained model is further configured to perform second fusion on the enhanced first feature and the enhanced second feature to obtain a second fusion result; and
the to-be-trained model is configured to:

enhance, based on the second fusion result, the enhanced first feature and the enhanced second feature to obtain a first feature with secondary enhancement and a second feature with secondary enhancement; and
obtain the location information of the object in the training image based on the first feature with secondary enhancement and the second feature with secondary enhancement.

18. The method according to claim 17, wherein the second fusion comprises at least one of the following: alignment, splicing, self-attention mechanism-based processing, feedforward network-based processing, or addition.

19. An object detection apparatus, wherein the apparatus comprises a target model, and the apparatus comprises:

an obtaining module, configured to obtain a target image, wherein the target image comprises a to-be-detected object;
an extraction module, configured to perform feature extraction on the target image to obtain a first feature, and perform feature extraction on the first feature to obtain a second feature;
a fusion module, configured to perform first fusion on the first feature and the second feature to obtain a first fusion result;
an enhancement module, configured to enhance the first feature and the second feature based on the first fusion result to obtain an enhanced first feature and an enhanced second feature; and
a detection module, configured to obtain location information of the object in the target image based on the enhanced first feature and the enhanced second feature.

20. A model training apparatus, wherein the apparatus comprises:

an obtaining module, configured to obtain a training image, wherein the training image comprises a to-be-detected object;
a processing module, configured to process the training image by using a to-be-trained model to obtain location information of the object in the training image, wherein the to-be-trained model is configured to: perform feature extraction on the training image to obtain a first feature, perform feature extraction on the first feature to obtain a second feature, perform first fusion on the first feature and the second feature to obtain a first fusion result, enhance the first feature and the second feature based on the first fusion result to obtain an enhanced first feature and an enhanced second feature, and obtain the location information based on the enhanced first feature and the enhanced second feature; and
a training module, configured to train the to-be-trained model based on the location information and real location information of the object in the training image to obtain a target model.

21. An object detection apparatus, wherein the object detection apparatus comprises a memory and a processor, the memory stores code, the processor is configured to execute the code, and when the code is executed, the object detection apparatus performs the method according to any one of claims 1 to 18.

22. A computer storage medium, wherein the computer storage medium stores one or more instructions, and when the instructions are executed by one or more computers, the one or more computers are enabled to implement the method according to any one of claims 1 to 18.

23. A computer program product, wherein the computer program product stores instructions, and when the instructions are executed by a computer, the computer is enabled to implement the method according to any one of claims 1 to 18.

Intelligent information chain

Intelligent products and industry application

| Translation/Text analysis/... | Speech/Vision/Image/... |

Data

Data processing:

| Data training/Machine learning/ Deep learning | Search/Inference/ Decision-making | ... |

Infrastructure

| Sensor | Intelligent chip | Infrastructure platform | ... |

IT value chain

FIG. 1

FIG. 2a

Interaction interface

Target image

Location information of an object in the target image

Memory

Processor

Data training/Machine learning/Deep learning

Search/Inference/ Decision-making

...

Data processing device (server)

13:21

EP 4 742 189 A1

| User | Intelligent terminal |

13:21

**Interaction interface**

**Target image** | **Location information of an object in the target image**

**Memory** | **Processor:** | Data training/Machine learning/ Deep learning | Search/Inference/ Decision-making | ...

Intelligent terminal

FIG. 2b

EP 4 742 189 A1

300

Data storage system 250

Execution device 210

...

Communication network

Local device 301

Local device 302

Examples

FIG. 2c

FIG. 3

Target model

Target image → Backbone network → Low-dimensional information aggregation-distribution branch → Object detection head → Location information of an object in the target image

FIG. 4

Obtain a target image, where the target image includes a to-be-detected object — 501

Perform feature extraction on the target image to obtain a first feature, and perform feature extraction on the first feature to obtain a second feature — 502

Perform first fusion on the first feature and the second feature to obtain a first fusion result — 503

Enhance the first feature and the second feature based on the first fusion result to obtain an enhanced first feature and an enhanced second feature — 504

Obtain location information of the object in the target image based on the enhanced first feature and the enhanced second feature — 505

FIG. 5

FIG. 6

EP 4 742 189 A1

EP 4 742 189 A1

Low-dimensional information aggregation-distribution branch

B5

Linear interpolation

B4

C

Low-dimensional fusion module

Low-dimensional alignment module

B3

Pooling

Reparameterized convolution

Low-dimensional fusion result

FIG. 7

FIG. 8

FIG. 9

FIG. 10

Low-dimensional information aggregation-distribution branch

FIG. 11

FIG. 12

FIG. 13

FIG. 14

FIG. 15

| Obtain a target image, where the target image includes a to-be-detected object | 1601 |

↓

| Perform feature extraction on the target image to obtain a first feature, and perform feature extraction on the first feature to obtain a second feature | 1602 |

↓

| Perform first fusion on the first feature and the second feature to obtain a first fusion result | 1603 |

↓

| Enhance the first feature and the second feature based on the first fusion result to obtain an enhanced first feature and an enhanced second feature | 1604 |

↓

| Perform second fusion on the enhanced first feature and the enhanced second feature to obtain a second fusion result | 1605 |

↓

| Enhance the enhanced first feature and the enhanced second feature based on the second fusion result to obtain a first feature with secondary enhancement and a second feature with secondary enhancement | 1606 |

↓

| Obtain location information of the object in the image based on the first feature with secondary enhancement and the second feature with secondary enhancement | 1607 |

FIG. 16

FIG. 17

EP 4 742 189 A1

FIG. 18

| Method | Input Size | $AP^{val}$ | $AP^{val}_{50}$ | FPS (bs=1) | FPS (bs=32) | Latency (bs=1) | Params | FLOPs |
|---|---|---|---|---|---|---|---|---|
| YOLOv5-N [8] | 640 | 28.0% | 45.7% | 602 | 735 | 1.7 ms | 1.9 M | 4.5 G |
| YOLOv5-S [8] | 640 | 37.4% | 56.8% | 376 | 444 | 2.7 ms | 7.2 M | 16.5 G |
| YOLOv5-M [8] | 640 | 45.4% | 64.1% | 182 | 209 | 5.5 ms | 21.2 M | 49.0 G |
| YOLOv5-L [8] | 640 | 49.0% | 67.3% | 113 | 126 | 8.8 ms | 46.5 M | 109.1 G |
| YOLOX-Tiny [7] | 416 | 32.8% | 50.3% | 717 | 1143 | 1.4 ms | 5.1 M | 6.5 G |
| YOLOX-S [7] | 640 | 40.5% | 59.3% | 333 | 396 | 3.0 ms | 9.0 M | 26.8 G |
| YOLOX-M [7] | 640 | 46.9% | 65.6% | 155 | 179 | 6.4 ms | 25.3 M | 73.8 G |
| YOLOX-L [7] | 640 | 49.7% | 68.0% | 94 | 103 | 10.6 ms | 54.2 M | 155.6 G |
| PPYOLOE-S [33] | 640 | 43.1% | 59.6% | 327 | 419 | 3.1 ms | 7.9 M | 17.4 G |
| PPYOLOE-M [33] | 640 | 49.0% | 65.9% | 152 | 189 | 6.6 ms | 23.4 M | 49.9 G |
| PPYOLOE-L [33] | 640 | 51.4% | 68.6% | 101 | 127 | 10.1 ms | 52.2 M | 110.1 G |
| YOLOv7-Tiny [29] | 416 | 33.3% | 49.9% | 787 | 1196 | 1.3 ms | 6.2 M | 5.8 G |
| YOLOv7-Tiny [29] | 640 | 37.4% | 55.2% | 424 | 519 | 2.4 ms | 6.2 M | 13.7 G |
| YOLOv7 [29] | 640 | 51.2% | 69.7% | 110 | 122 | 9.0 ms | 36.9 M | 104.7 G |
| YOLOv7-E6E [29] | 1280 | 56.8% | 74.4% | 16 | 17 | 59.6 ms | 151.7 M | 843.2 G |
| YOLOv8-N [9] | 640 | 37.3% | 52.6% | 561 | 734 | 1.8 ms | 3.2 M | 8.7 G |
| YOLOv8-S [9] | 640 | 44.9% | 61.8% | 311 | 387 | 3.2 ms | 11.2 M | 28.6 G |
| YOLOv8-M [9] | 640 | 50.2% | 67.2% | 143 | 176 | 7.0 ms | 25.9 M | 78.9 G |
| YOLOv8-L [9] | 640 | 52.9% | 69.8% | 91 | 105 | 11.0 ms | 43.7 M | 165.2 G |
| YOLOv6-3.0-N [14] | 640 | 37.0% / 37.5%$^\dagger$ | 52.7% / 53.1%$^\dagger$ | 779 | 1187 | 1.3 m s | 4.7 M | 11.4 G |
| YOLOv6-3.0-S [14] | 640 | 44.3% / 45.0%$^\dagger$ | 61.2% / 61.8%$^\dagger$ | 339 | 484 | 2.9 ms | 18.5 M | 45.3 G |
| YOLOv6-3.0-M [14] | 640 | 49.1% / 50.0%$^\dagger$ | 66.1% / 66.9%$^\dagger$ | 175 | 226 | 5.7 ms | 34.9 M | 85.8 G |
| YOLOv6-3.0-L [14] | 640 | 51.8% / 52.8%$^\dagger$ | 69.2% / 70.3%$^\dagger$ | 98 | 116 | 10.3 ms | 59.6 M | 150.7 G |
| GD-YOLO-N | 640 | 39.6% / 39.9%$^\dagger$ | 55.7% / 55.9%$^\dagger$ | 563 | 1030 | 1.7 ms | 5.6 M | 12.1 G |
| GD-YOLO-S | 640 | 45.4% / 46.1%$^\dagger$ | 62.5% / 63.3%$^\dagger$ | 286 | 446 | 3.3 ms | 21.5 M | 46.0 G |
| GD-YOLO-M | 640 | 49.8% / 50.9%$^\dagger$ | 67.0% / 68.2%$^\dagger$ | 152 | 220 | 6.4 ms | 41.3 M | 87.5 G |
| GD-YOLO-L | 640 | 51.8% / 53.2%$^\dagger$ | 68.9% / 70.5%$^\dagger$ | 88 | 116 | 11.1 ms | 75.1 M | 151.7 G |
| GD-YOLO-S* | 640 | 45.5% / 46.4%$^\dagger$ | 62.2% / 63.4%$^\dagger$ | 286 | 446 | 3.3 ms | 21.5 M | 46.0 G |
| GD-YOLO-M* | 640 | 50.2% / 51.1%$^\dagger$ | 67.5% / 68.5%$^\dagger$ | 152 | 220 | 6.4 ms | 41.3 M | 87.5 G |
| GD-YOLO-L* | 640 | 52.3% / 53.3%$^\dagger$ | 69.6% / 70.9%$^\dagger$ | 88 | 116 | 11.1 ms | 75.1 M | 151.7 G |

FIG. 19

Obtain a training image, where the training image includes a to-be-detected object    2001

Process the training image by using a to-be-trained model to obtain location information of the object in the training image, where the to-be-trained model is configured to: perform feature extraction on the training image to obtain a first feature, perform feature extraction on the first feature to obtain a second feature, perform first fusion on the first feature and the second feature to obtain a first fusion result, enhance the first feature and the second feature based on the first fusion result to obtain an enhanced first feature and an enhanced second feature, and obtain the location information based on the enhanced first feature and the enhanced second feature    2002

Train the to-be-trained model based on the location information and real location information of the object in the training image to obtain a target model    2003

FIG. 20

Object detection apparatus

Obtaining module    2101

Extraction module    2102

Fusion module    2103

Enhancement module    2104

Detection module    2105

FIG. 21

Model training apparatus

Obtaining module — 2201

Processing module — 2202

Training module — 2203

FIG. 22

2300

Execution device

Antenna

Antenna

Receiver 2301

Transmitter 2302

Processor 2303

Memory 2304

Application processor 23031

Communication processor 23032

FIG. 23

FIG. 24

| | | Weight memory 2502 | |
|---|---|---|---|

Host CPU

Input memory 2501

Operation circuit 2503

Vector computing unit 2507

Accumulator 2508

Direct memory access controller 2505

Unified memory 2506

Controller 2504

Instruction fetch buffer 2509

External memory

Bus interface unit 2513

Neural-network processing unit 2500

FIG. 25

## INTERNATIONAL SEARCH REPORT

| International application No. |
| --- |
| **PCT/CN2024/107500** |

**A. CLASSIFICATION OF SUBJECT MATTER**

G06V20/52(2022.01)i; G06V10/24(2022.01)i; G06V10/40(2022.01)i; G06V10/82(2022.01)i; G06V10/80(2022.01)i; G06N3/0464(2023.01)i; G06N3/048(2023.01)i; G06N3/0985(2023.01)i

According to International Patent Classification (IPC) or to both national classification and IPC

**B. FIELDS SEARCHED**

Minimum documentation searched (classification system followed by classification symbols)

IPC: G06V G06N

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT: 目标, 对象, 物体, 位置, 坐标, 图像, 图片, 识别, 增强, 特征, 融合, 交叉, 注意力, object, position, image, picture, recognition, enhance, feature, fusion, cross, attention

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117173626 A (HUAWEI TECHNOLOGIES CO., LTD.) 05 December 2023 (2023-12-05) claims 1-23, and description, paragraphs [0005]-[0295] | 1-23 |
| X | CN 114387496 A (BEIJING KUANGSHI TECHNOLOGY CO., LTD. et al.) 22 April 2022 (2022-04-22) description, paragraphs [0034]-[0112] | 1-23 |
| A | CN 115035361 A (HAINAN ACOUSTICS LABORATORY, INSTITUTE OF ACOUSTICS, CHINESE ACADEMY OF SCIENCES) 09 September 2022 (2022-09-09) entire document | 1-23 |
| A | CN 115797706 A (YUEGANG AODAWAN DIGITAL ECONOMIC RESEARCH INSTITUTE (FUTIAN)) 14 March 2023 (2023-03-14) entire document | 1-23 |
| A | CN 115880555 A (BEIJING BAIDU NETCOM SCIENCE AND TECHNOLOGY CO., LTD.) 31 March 2023 (2023-03-31) entire document | 1-23 |

☐ Further documents are listed in the continuation of Box C. ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 September 2024** | **16 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/107500**

| Patent document cited in search report | | | Publication date (day/month/year) | Patent family member(s) | | | Publication date (day/month/year) |
|---|---|---|---|---|---|---|---|
| CN | 117173626 | A | 05 December 2023 | None | | | |
| CN | 114387496 | A | 22 April 2022 | None | | | |
| CN | 115035361 | A | 09 September 2022 | None | | | |
| CN | 115797706 | A | 14 March 2023 | CN | 115797706 | B | 14 July 2023 |
| CN | 115880555 | A | 31 March 2023 | CN | 115220555 | B | 30 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310940169